# EUROPÄISCHE PATENTSCHRIFT

(11) **EP 3 115 297 B1**
(45) Veröffentlichungstag und Bekanntmachung des Hinweises auf die Patenterteilung: **02.01.2019**
(21) Anmeldenummer: 16001463.5
(22) Anmeldetag: 30.06.2016
(51) Int. Cl.: B64D 11/06

(54) **ELEKTRISCHES GERÄT FÜR EIN LUFTFAHRZEUG, GERÄTEANORDNUNG FÜR EIN LUFTFAHRZEUG, VERBINDUNGSEINHEIT, FLUGGASTSITZ SOWIE BAUREIHE VON ELEKTRISCHEN GERÄTEN FÜR LUFTFAHRZEUGE**
ELECTRIC DEVICE FOR AN AIRCRAFT, ASSEMBLY FOR AN AIRCRAFT, CONNECTION UNIT, AIRCRAFT PASSENGER SEAT, SERIES OF ELECTRICAL DEVICES FOR AIRCRAFT
APPAREIL ELECTRIQUE POUR UN AERONEF, SYSTEME D'APPAREIL POUR UN AERONEF, UNITE DE LIAISON, SIEGE D'AVION POUR PASSAGER ET GAMME D'APPAREILS ELECTRIQUES POUR AERONEFS

(30) Priorität: 10.07.2015 DE 102015008999
(43) Veröffentlichungstag der Anmeldung: 11.01.2017
(73) Patentinhaber: Weigele, Uwe Dieter, 88605 Meßkirch (DE)
(72) Erfinder: Weigele, Uwe Dieter, 88605 Meßkirch (DE)
(74) Vertreter: Fugmann, Winfried

(56) Entgegenhaltungen:
- WO-A1-2008/134743
- WO-A1-2014/200854
- WO-A2-2011/057294
- US-A1- 2005 268 319

## Beschreibung

Die vorliegende Erfindung betrifft ein elektrisches Gerät für ein Luftfahrzeug, eine Geräteanordnung für ein Luftfahrzeug, eine Verbindungseinheit zum Verbinden eines elektrischen Verbrauchers eines Luftfahrzeugs mit einem Bordnetz des Luftfahrzeugs, einen Fluggastsitz sowie eine Baureihe von elektrischen Geräten für Luftfahrzeuge.

In modernen Luftfahrzeugen ist eine Vielzahl elektrischer Geräte vorhanden, die zur Versorgung mit elektrischer Energie in der Regel an ein Bordnetz des Luftfahrzeugs angeschlossen sind. So erfolgt die Energieversorgung für elektrische Geräte in den Kabinen von Großraum-Passagierflugzeugen üblicherweise über ein Wechselspannungsbordnetz des Flugzeugs, das Drehstrom mit einer Spannung von beispielsweise 115 V zur Verfügung stellt. Die Geräte werden über Rund- oder Rechtecksteckverbinder mit dem Bordnetz verbunden. Auf den Anschlüssen dieser Steckverbinder sind beispielsweise die drei Phasen des Drehstroms, der Neutralleiter sowie die Schutzerde aufgelegt. Oft befinden sich noch zusätzliche Leitungen zur Datenübertragung in den Steckverbindern.

Häufig sind in der Kabine von Großraum-Passagierflugzeugen viele elektrische Geräte räumlich nahe beieinander angeordnet. So sind beispielsweise in einem Premium-Fluggastsitz ein elektronisches Unterhaltungssystem, Bildschirme und ein Aktuatorsystem zur Verstellung des Sitzes eingebaut. Diese Geräte sind üblicherweise in einer Reihenschaltung mit dem Bordnetz verbunden, wobei ein erstes Gerät direkt an das Bordnetz angeschlossen ist, ein zweites Gerät an das erste Gerät angeschlossen ist und weitere Geräte jeweils an ein in der Reihenschaltung vorhergehendes Gerät angeschlossen sind. Eine derartige Reihenschaltung oder Verkettung von Geräten wird auch als "Daisy Chaining" bezeichnet. Hierzu sind an jedem Gerät ein Eingangssteckverbinder zum Anschluss an das Bordnetz bzw. an das vorgeschaltete Gerät und ein Ausgangssteckverbinder zum Anschließen eines nachgeschalteten Geräts vorgesehen. Oft ist für den oder die elektrischen Verbraucher eines Geräts zusätzlich ein Leitungsschutzschalter vorhanden, der auch als "Circuit Breaker" bezeichnet wird und mit dem der oder die elektrischen Verbraucher nach Bedarf abgeschaltet werden kann bzw. können.

Aus WO 2014/200854 A1 ist eine vernetzte Abfolge von Flugzeugsitzgeräten bekannt, wobei die Geräte sowohl Netzstrom als auch Datenkommunikation über den gleichen Anschluss erhalten. Die Geräte können über eine Zweidrahtverbindung miteinander verbunden sein und in einer Daisy Chain angeordnet sein. Verschiedene Flugzeugsitzgeräte, die Schaltungen für die elektrische Verbindung und die Datenkommunikation über einen Bus enthalten, sind direkt mit dem Netzwerk verbunden. Standardgeräte, die keine Schaltungen für die Datenkommunikation enthalten, sind über Steuerungsmodule, die Schaltungen für die Datenkommunikation über den Bus enthalten, mit dem Netzwerk verbunden.

Bei unterschiedlichen Flugzeugen sind unterschiedliche Steckverbinder bzw. unterschiedliche Steckersysteme mit jeweils unterschiedlicher Belegung der Anschlüsse im Einsatz. Insbesondere haben unterschiedliche Flugzeughersteller jeweils eigene Normen für die Steckersysteme zur Verbindung der elektrischen Geräte mit dem Bordnetz. Dies führt dazu, dass für jeden Gerätetyp mehrere unterschiedliche, jeweils nach Stecker- und Verkabelungssystem unterschiedliche Geräte entwickelt, hergestellt und luftfahrttechnisch zugelassen sowie von den Fluggesellschaften beschafft und gelagert werden müssen. Hierdurch entsteht ein erheblicher Aufwand. Diese unterschiedlichen Geräte unterscheiden sich oft nur durch die eingebauten Steckverbinder, durch die interne Verkabelung oder durch die Bauart des Leitungsschutzschalters.

Aus der gattungsfremden Patentschrift US 4,146,287 ist ein Verkabelungssystem für die Beleuchtung und Stromversorgung eines Geschossbereichs in einem Gebäude bekannt. Dabei ist ein Verbindermodul, das über einen Eingangsverbinder mit einer Beleuchtungsvorrichtung verbunden ist, über eine Eingangs-Steckverbindung mit einem Stromnetz und über eine Ausgangs-Steckverbindung mit einem nachfolgenden Verbindermodul verbunden.

In WO 2008/134743 A1 ist ein rekonfigurierbares Netzwerksystem offenbart. Das Netzwerksystem umfasst ein Dock mit mehreren Anschlüssen, das einen Controller beinhaltet, der die Konfiguration der internen Anschlüsse anpasst, je nachdem an welchem Anschluss ein Host-fähiges System angeschlossen ist. Für eine externe Stromversorgung ist ein Netzadapter vorgesehen, der an das Netzwerk-Dock angeschlossen werden kann. Das Netzwerk-Dock kann andererseits mit einem Tastatur-Dock verbunden werden. Sowohl an das Netzwerk-Dock als auch an das Tastatur-Dock können elektronische Geräte angeschlossen werden.

Es ist Aufgabe der vorliegenden Erfindung, ein elektrisches Gerät für ein Luftfahrzeug, eine Geräteanordnung für ein Luftfahrzeug, eine Verbindungseinheit zum Verbinden eines elektrischen Verbrauchers eines Luftfahrzeugs mit einem Bordnetz des Luftfahrzeugs, einen Fluggastsitz sowie eine Baureihe von elektrischen Geräten für Luftfahrzeuge anzugeben, wobei der oben genannte Nachteil vermieden oder verringert werden kann.

Diese Aufgabe wird durch ein elektrisches Gerät gemäß Anspruch 1, eine Geräteanordnung gemäß Anspruch 11, durch eine Verbindungseinheit gemäß Anspruch 12, durch einen Fluggastsitz gemäß Anspruch 13 sowie durch eine Baureihe gemäß Anspruch 14 gelöst.

Ein erfindungsgemäßes elektrisches Gerät ist für die Verwendung in einem Luftfahrzeug, insbesondere in der Kabine eines Großraumpassagierflugzeugs, vorzugsweise an einem Fluggastsitz des Luftfahrzeugs, ausgebildet. Die Bezeichnung "elektrisches Gerät" umfasst hier und im Folgenden auch ein elektronisches Gerät. Das Luftfahrzeug verfügt über ein Bordnetz, das eine Netzspannung zur Versorgung elektrischer Geräte mit elektrischer Energie, insbesondere bei einem Großraumpassagierflugzeug in der Kabine aufgenommener elektrischer Geräte mit elektrischer Energie, zur Verfügung stellt.

Das elektrische Gerät umfasst mindestens einen elektrischen Verbraucher. Der Verbraucher kann beispielsweise eine elektronische Unterhaltungseinrichtung, ein Bildschirm, eine Steuerungseinrichtung, ein Aktuator zur Sitzverstellung oder auch ein Netzteil für einen der vorgenannten Verbraucher oder für einen externen Verbraucher, etwa eine Lampe, sein. Der Verbraucher ist zur Versorgung mit elektrischer Energie mit dem Bordnetz des Luftfahrzeugs verbindbar.

Weiter weist das elektrische Gerät mindestens einen Eingangssteckverbinder und mindestens einen Ausgangssteckverbinder auf, die elektrisch miteinander verbunden sind. Zumindest jeweils zwei Kontakte des mindestens einen Eingangssteckverbinders und des mindestens einen Ausgangssteckverbinders sind miteinander verbunden. Der mindestens eine elektrische Verbraucher ist mit dem mindestens einen Eingangssteckverbinder elektrisch verbunden. Der Eingangssteckverbinder ist direkt oder indirekt mit dem Bordnetz des Luftfahrzeugs verbindbar, um den mindestens einen elektrischen Verbraucher mit elektrischer Energie zu versorgen.

Weiterhin ist das elektrische Gerät zur Verbindung mit einem Datennetz des Luftfahrzeugs ausgebildet. Hierfür kann der Eingangssteckverbinder zusätzlich zu den Kontakten, die zur Übertragung elektrischer Energie, d.h. zum Anschluss des elektrischen Geräts an die Netzspannung des Bordnetzes dienen, weitere Kontakte umfassen, die zur Datenübertragung dienen können. Derartige Steckverbinder, die Kontakte für die Datenübertragung aufweisen, sind bekannt. Es kann auch vorgesehen sein, dass die Datenübertragung über dieselben oder über zumindest zwei der elektrischen Kontakte erfolgt, die zur Spannungsversorgung dienen. Alternativ oder zusätzlich können für die Verbindung mit dem Datennetz des Luftfahrzeugs und für die Datenübertragung ein oder mehrere weitere Steckverbinder vorgesehen sein. Die Datenübertragung kann über einen Datenbus erfolgen, etwa gemäß dem ARINC 485 - Standard. Die Datenübertragung zwischen dem elektrischen Gerät und dem Datennetz kann uni- oder bidirektional erfolgen.

Erfindungsgemäß umfasst das elektrische Gerät eine Verbrauchereinheit und eine Verbindungseinheit, wobei der mindestens eine elektrische Verbraucher von der Verbrauchereinheit umfasst ist und wobei die Verbindungseinheit den mindestens einen Eingangssteckverbinder und den mindestens einen Ausgangssteckverbinder aufweist. Das elektrische Gerät ist somit insbesondere in eine Verbrauchereinheit und eine Verbindungseinheit aufgeteilt, wobei der bzw. die Verbraucher der Verbrauchereinheit zugeordnet ist bzw. sind und der bzw. die Eingangs- und Ausgangssteckverbinder der Verbindungseinheit zugeordnet ist bzw. sind. Sofern ein oder mehrere weitere Steckverbinder zum Anschluss an das Datennetz des Luftfahrzeugs vorhanden sind, sind diese ebenfalls der Verbindungseinheit zugeordnet. Der mindestens eine Verbraucher kann zur Versorgung mit elektrischer Energie über die Verbindungseinheit mit dem Bordnetz verbunden werden. Insbesondere sind der mindestens eine Eingangssteckverbinder, der mindestens eine Ausgangssteckverbinder und der mindestens eine Verbraucher derart ausgebildet und miteinander verbunden, dass eine Mehrzahl elektrischer Geräte über ihre jeweiligen Eingangs- und Ausgangssteckverbinder miteinander in Reihe geschaltet werden können und insbesondere nach Art eines "Daisy Chaining" miteinander verkettet werden und dadurch an das Bordnetz angeschlossen werden können. Hierfür kann an den mindestens einen Ausgangssteckverbinder eines ersten elektrischen Geräts der mindestens eine Eingangsstecker eines zweiten elektrischen Geräts angeschlossen werden, wobei zumindest die Verbindungseinheit des zweiten Geräts mit der des ersten Geräts baugleich ist; entsprechendes gilt für den Anschluss jeweils eines weiteren elektrischen Geräts mit ebenfalls baugleicher Verbindungseinheit an ein in der Reihenschaltung jeweils vorhergehendes Gerät. Der die Netzspannung dem elektrischen Gerät zuführende Eingangssteckverbinder und der die Netzspannung ggf. zu einem oder mehreren weiteren Geräten weiterleitende Ausgangssteckverbinder sind somit aus der Verbrauchereinheit ausgelagert und der Verbindungseinheit zugeordnet. Die Verbindungseinheit kann derart ausgebildet sein, dass sie keinen elektrischen Verbraucher umfasst, sondern lediglich elektrische Leitungen und Steckverbinder sowie ggf. ein oder mehrere Schalter bzw. Sicherungselemente; die Verbindungseinheit kann in vorteilhafter Weise auch Abschirmungselemente und/oder durch Kapazitäten und Induktivitäten gebildete Filter umfassen.

Erfindungsgemäß weist die Verbrauchereinheit einen Versorgungssteckverbinder auf, der zur Versorgung des mindestens einen Verbrauchers mit elektrischer Energie mit dem mindestens einen Verbraucher der Verbrauchereinheit elektrisch verbunden ist. Die Verbindungseinheit weist mindestens einen Verbrauchersteckverbinder auf, der mit dem mindestens einen Eingangssteckverbinder verbunden ist und der mit dem mindestens einen Versorgungssteckverbinder zur Versorgung des mindestens einen Verbrauchers lösbar zusammensteckbar ist. Die elektrische Verbindung der Verbrauchereinheit mit der Verbindungseinheit ist somit über eine Steckverbindung geführt, vorzugsweise über eine einzige Steckverbindung, die jedoch eine Mehrzahl von elektrischen Kontakten umfassen kann. Die Verbindung des mindestens einen Verbrauchers mit dem Bordnetz erfolgt somit über die Steckverbindung mit dem Versorgungs- und dem Verbrauchersteckverbinder, insbesondere nur über diese Steckverbindung und nur über die Verbindungseinheit. Dabei kann es vorgesehen sein, dass eine Datenübertragung über dieselben oder über zumindest zwei der elektrischen Kontakte erfolgt, die zur Versorgung des mindestens einen Verbrauchers mit elektrischer Energie dienen, der Versorgungs- und der Verbrauchersteckverbinder können aber auch jeweils zusätzlich zu denjenigen Kontakten, die zur Übertragung elektrischer Energie dienen, weitere Kontakte umfassen, die zur uni- oder bidirektionalen Datenübertragung dienen können. Alternativ oder zusätzlich können für die Datenübertragung zwischen der Verbraucher- und der Verbindungseinheit ein oder mehrere weitere Steckverbinder vorgesehen sein.

In entsprechender Weise wie der Eingangssteckverbinder kann auch der mindestens eine Ausgangssteckverbinder zusätzlich zu den zur Energieübertragung dienenden Kontakten weitere Kontakte für die Datenübertragung umfassen und/oder es können weitere Steckverbinder für eine uni- oder bidirektionale Datenverbindung mit einem mit dem elektrischen Gerät in Reihe geschalteten weiteren elektrischen Gerät vorgesehen sein. Die zur Datenübertragung dienenden Kontakte des mindestens einen Eingangssteckverbinders, des mindestens einen Ausgangssteckverbinders und des mindestens einen Verbrauchersteckverbinders bzw. die zur Datenübertragung dienenden weiteren Steckverbinder können in entsprechender Weise wie die zur Versorgung mit elektrischer Energie dienenden Kontakte miteinander verbunden sein.

Weiter ist erfindungsgemäß die Verbindungseinheit mit der Verbrauchereinheit lösbar verbunden, beispielsweise an der Verbrauchereinheit lösbar befestigt. Hierfür können die Verbindungseinheit und/oder die Verbrauchereinheit mechanische Verbindungsmittel umfassen, so dass durch Verbinden der Verbindungsmittel die Verbindungseinheit an der Verbrauchereinheit befestigt werden kann und durch Lösen der Verbindungsmittel von dieser getrennt werden kann. Vorzugsweise sind die Verbindungsmittel verriegelbar, um eine sichere Verbindung bzw. Befestigung zu gewährleisten. Die Verbrauchereinheit kann beispielsweise an einer Sitzstruktur eines Flugzeugsitzes befestigt sein, wobei die Verbindungseinheit nur an der Verbrauchereinheit befestigt ist.

Dadurch, dass die Verbrauchereinheit sowohl mechanisch als auch elektrisch lösbar mit der Verbindungseinheit verbunden ist, wird es ermöglicht, die Verbrauchereinheit von der Verbindungseinheit zu trennen und beispielsweise eine defekte Verbrauchereinheit durch eine neue zu ersetzen, ohne den Eingangs- und den Ausgangssteckverbinder der Verbindungseinheit lösen zu müssen. Bei einem Austausch der Verbrauchereinheit ist somit kein Austausch der Verbindungseinheit erforderlich. In dem Fall, dass das elektrische Gerät derart verkettet ist, dass ein weiteres Gerät über den Eingangs- und den Ausgangssteckverbinder der Verbindungseinheit mit dem Bordnetz des Luftfahrzeugs verbunden ist, kann daher die Verbrauchereinheit entnommen und ausgetauscht werden, ohne dass die Energieversorgung des weiteren Geräts unterbrochen werden muss. Schließlich ist es nicht notwendig, zur Anpassung an unterschiedliche Steckersysteme bzw. Normen unterschiedlicher Flugzeuge bzw. Flugzeughersteller jeweils unterschiedliche elektrische Geräte herzustellen, zuzulassen, zu beschaffen und zu lagern, sondern lediglich entsprechend angepasste Verbindungseinheiten. Die Verbrauchereinheit kann daher für einen Geräte- bzw. Verbrauchertyp unabhängig von dem jeweiligen Luftfahrzeug einheitlich ausgebildet sein. Die Verbindungseinheit kann andererseits jeweils an das Steckersystem bzw. die Normen für einen Flugzeugtyp bzw. einen Flugzeughersteller angepasst sein, jedoch den Anschluss unterschiedlicher Verbrauchereinheiten ermöglichen, so dass für einen Flugzeugtyp bzw. einen Flugzeughersteller nur ein Typ der Verbindungseinheit oder nur wenige unterschiedliche Typen von Verbindungseinheiten benötigt werden, die die Verbindung einer Vielzahl unterschiedlicher Verbrauchereinheiten mit dem Bordnetz herstellen können. Hierdurch wird eine kostengünstigere Herstellung der Verbraucher- und der Verbindungseinheit in größeren Stückzahlen und eine einfachere Handhabung und Wartung der entsprechenden elektrischen Geräte ermöglicht. Ferner kann durch die Trennung der Verbindungsverdrahtung und der elektrischen Verbraucher in separate, voneinander lösbare Einheiten eine Erhöhung der Sicherheit erreichbar sein.

Vorzugsweise weist die Verbrauchereinheit ein Gehäuse auf, das im Folgenden als Verbrauchergehäuse bezeichnet wird, in dem der mindestens eine elektrische Verbraucher aufgenommen ist. Weiter weist die Verbindungseinheit ein Gehäuse auf, das im Folgenden als Verbindergehäuse bezeichnet wird, innerhalb dessen elektrische Leitungen zur Verbindung des mindestens einen Ausgangssteckverbinders und des mindestens einen Verbrauchersteckverbinders mit dem mindestens einen Eingangssteckverbinder verlaufen. Die elektrischen Leitungen können beispielsweise als Drähte, Leiterplatten oder als Kombination von Drähten und Leiterplatten ausgebildet sein. Die elektrischen Leitungen können ggf. auch Datenleitungen umfassen, die entsprechende Kontakte der Steckverbinder bzw. separate Steckverbinder miteinander verbinden. Das Verbrauchergehäuse und das Verbindergehäuse können metallisch und zur Verbindung mit einer Schutzerde ausgebildet sein, wobei es vorgesehen sein kann, dass diese Verbindung automatisch beim Verbinden der jeweiligen Steckverbinder hergestellt wird. Ferner können in vorteilhafter Weiterbildung dieser Ausführungsform der Erfindung das Verbindergehäuse und das Verbrauchergehäuse jeweils mechanische Verbindungsmittel aufweisen, die zum lösbaren Befestigen des Verbindergehäuses an dem Verbrauchergehäuse zusammenwirken. Auf diese Weise wird einerseits eine kompakte und robuste sowie durch ein geerdetes Gehäuse besonders sichere Ausführung der Verbrauchereinheit und der Verbindungseinheit ermöglicht. Ferner wird es hierdurch auf einfache Weise ermöglicht, die Verbindungseinheit fest, jedoch lösbar mit der Verbrauchereinheit zu verbinden.

In bevorzugter Weise sind die mechanischen Verbindungsmittel zum lösbaren Verbinden des Verbindergehäuses mit dem Verbrauchergehäuse als mindestens ein Schnellverschluss ausgebildet. Hierdurch wird es ermöglicht, die Verbindungseinheit besonders einfach und sicher an der Verbrauchereinheit zu befestigen und mit dieser zu verriegeln. Alternativ oder zusätzlich kann es vorgesehen sein, dass die mechanischen Verbindungsmittel mindestens eine Schraubverbindung umfassen. Hierdurch kann eine besonders sichere Verbindung der Verbindungseinheit mit der Verbrauchereinheit erzielbar sein. Ferner können Befestigungsmittel zum Befestigen des Verbrauchergehäuses und/oder des Verbindergehäuses an einer Sitzstruktur des Fluggastsitzes vorgesehen sein, die in vorteilhafter Weise als Schnellverschluss ausgebildet sein und/oder mindestens eine Schraubverbindung umfassen können.

Die Befestigungs- bzw. mechanischen Verbindungsmittel können in vorteilhafter Weise mindestens einen Zapfen und/oder mindestens eine Führung umfassen. Insbesondere ist es bevorzugt, dass ein Schnellverschluss einen Zapfen und/oder eine Führung aufweist. Hierdurch wird das Herstellen der lösbaren Verbindung der Verbindungseinheit mit der Verbrauchereinheit weiter erleichtert.

Gemäß einer besonders bevorzugten Ausführungsform der Erfindung ist der Verbrauchersteckverbinder an dem Verbindergehäuse befestigt, und der Versorgungssteckverbinder ist an dem Verbrauchergehäuse befestigt, beispielsweise können der Verbrauchersteckverbinder und der Versorgungssteckverbinder jeweils in eine Ausnehmung des betreffenden Gehäuses eingesetzt sein. Vorzugsweise sind der Verbrauchersteckverbinder und der Versorgungssteckverbinder derart angeordnet, dass die elektrische Verbindung automatisch hergestellt wird, wenn die Verbindungseinheit und die Verbrauchereinheit mit den mechanischen Verbindungsmitteln aneinander befestigt werden; ebenso kann es vorgesehen sein, dass beim Lösen der mechanischen Verbindung die elektrische Verbindung automatisch gelöst wird. Durch eine Verriegelung der mechanischen Verbindung wird somit zugleich die elektrische Verbindung gesichert. Ferner kann die Steckverbindung, die insbesondere eine kraftschlüssige Verbindung ist, zur Stabilität der mechanischen Verbindung der Verbindungseinheit mit der Verbrauchereinheit beitragen oder eine Zentrierung zur Erleichterung der mechanischen Verbindung bewirken. Hierdurch werden das Herstellen und das Lösen der Verbindung der Verbindungseinheit mit der Verbrauchereinheit weiter vereinfacht.

In vorteilhafter Weise kann der Verbrauchersteckverbinder versenkt bzw. vertieft in das Verbindergehäuse und/oder der Versorgungssteckverbinder versenkt bzw. vertieft in das Verbrauchergehäuse eingesetzt sein. Hierdurch wird nicht nur eine raumsparende Anordnung geschaffen, sondern es wird insbesondere auch eine solche Ausgestaltung der Verbindungseinheit und der Verbrauchereinheit ermöglicht, bei der beim mechanischen und elektrischen Verbinden der Verbindungseinheit mit der Verbrauchereinheit die beiden Gehäuse aneinander anliegen. Hierdurch wird auf einfache Weise eine besonders feste mechanische Verbindung der Verbindungseinheit mit der Verbrauchereinheit ermöglicht.

Alternativ kann es vorgesehen sein, dass die Verbrauchereinheit mit der Verbindungseinheit über mindestens ein Kabel verbunden ist, das mindestens einen Steckverbinder aufweist, der auf den Versorgungssteckverbinder und/oder den Verbrauchersteckverbinder aufgesteckt wird. Hierdurch kann eine sichere elektrische Verbindung des Verbrauchers mit der Verbindungseinheit ermöglicht werden, wobei zudem eine räumlich getrennte Anordnung der Verbraucher- und der Verbindungseinheit ermöglicht wird.

Weiterhin ist es bevorzugt, dass der mindestens eine Eingangssteckverbinder und der mindestens eine Ausgangssteckverbinder am Verbindergehäuse befestigt sind, beispielsweise in eine Ausnehmung des Gehäuses eingesetzt sind. Hierdurch wird eine besonders kompakte und robuste Ausgestaltung ermöglicht. Alternativ kann es vorgesehen sein, dass der mindestens eine Eingangssteckverbinder und/oder der mindestens eine Ausgangssteckverbinder vom Verbindergehäuse abgesetzt und über ein vorzugsweise kurzes Kabel mit dem Verbindergehäuse bzw. der Verbindungseinheit verbunden ist bzw. sind. Das Kabel kann beispielsweise eine Länge aufweisen, um die Verbindung mit einem vor- oder nachgeschalteten elektrischen Gerät herzustellen. In entsprechender Weise können ggf. ein oder mehrere weitere Steckverbinder, die zur Datenübertragung dienen, am Verbindergehäuse befestigt oder vom Verbindergehäuse abgesetzt und über ein Kabel mit diesem verbunden sein. Hierdurch kann es erreicht werden, dass besonders wenige Teile zur Schaffung einer verketteten Anordnung mehrerer Geräte ausreichen, insbesondere keine separaten Kabel benötigt werden.

Erfindungsgemäß sind der mindestens eine Eingangssteckverbinder und der mindestens eine Ausgangssteckverbinder zur Weiterleitung einer Mehrphasen-Wechselspannung ausgebildet und weisen hierfür entsprechende Kontakte auf, beispielsweise drei Kontakte für die drei Phasen von Drehstrom sowie weitere Kontakte für den Neutralleiter und ggf. die Schutzerde. Dabei sind mindestens zwei Kontakte des Eingangs- und des Ausgangssteckverbinders zur Vertauschung von mindestens zwei Phasen der Mehrphasen-Wechselspannung miteinander verbunden, d.h. in der geometrischen Anordnung der für die Energieübertragung vorgesehenen Kontakte sind beim Eingangs- und beim Ausgangssteckverbinder unterschiedliche Phasen einander entsprechenden Kontakten zugeordnet. Hierdurch ist eine gleichmäßigere Auslastung der einzelnen Phasen durch die angeschlossenen Verbraucher erreichbar.

Gemäß einer bevorzugten Ausführungsform der Erfindung umfasst die Verbindungseinheit mindestens einen weiteren Verbrauchersteckverbinder zur elektrischen Verbindung mit mindestens einem weiteren Verbraucher. Der mindestens eine weitere Verbrauchersteckverbinder kann wie der zuvor beschriebene Verbrauchersteckverbinder oder wie der zuvor beschriebene Ausgangssteckverbinder ausgebildet sein, kann aber auch abweichend vom zuvor beschriebenen Verbrauchersteckverbinder und vom Ausgangssteckverbinder ausgebildet sein. Der mindestens eine weitere Verbrauchersteckverbinder kann am Verbindergehäuse befestigt sein oder vom Verbindergehäuse abgesetzt und über ein Kabel mit diesem verbunden sein. Der mindestens eine weitere Verbrauchersteckverbinder kann in entsprechender Weise wie der zuvor beschriebene Verbrauchersteckverbinder zur Verbindung des mindestens einen Verbrauchers mit dem Bordnetz des Luftfahrzeugs mit dem mindestens einen Eingangssteckverbinder verbunden sein. Der mindestens eine weitere Verbrauchersteckverbinder kann auch zur Datenübertragung ausgebildet sein und hierfür mit dem mindestens einen Eingangssteckverbinder oder ggf. mit einem zum Anschluss an das Datennetz des Luftfahrzeugs dienenden weiteren Steckverbinder verbunden sein. Der mindestens eine weitere Verbraucher kann beispielsweise über ein Kabel mit einem entsprechenden Steckverbinder an den mindestens einen weiteren Verbrauchersteckverbinder anschließbar sein. Dadurch, dass die Verbindungseinheit mindestens einen weiteren Verbrauchersteckverbinder umfasst, wird die Versorgung mindestens eines weiteren Verbrauchers mit elektrischer Energie ermöglicht, wobei ein für den weiteren Verbraucher angepasster Steckverbinder verwendet werden kann, der zugleich derart ausgebildet und in der Verbindungseinheit elektrisch verbunden sein kann, dass eine Datenverbindung mit dem weiteren Verbraucher ermöglicht wird.

In bevorzugter Weise ist der mindestens eine elektrische Verbraucher, der von der Verbrauchereinheit umfasst ist, ein Netzteil, und der mindestens eine weitere Verbrauchersteckverbinder ist zur Versorgung des weiteren Verbrauchers mit elektrischer Energie über den mindestens einen Verbrauchersteckverbinder und den mindestens einen Versorgungssteckverbinder mit dem Netzteil verbindbar. Insbesondere ist der mindestens eine weitere Verbrauchersteckverbinder mittels innerhalb des Verbindergehäuses verlaufender elektrischer Leitungen, die beispielsweise als Drähte, Leiterplatten oder als Kombination von Drähten und Leiterplatten ausgebildet sein können, mit dem mindestens einen Verbrauchersteckverbinder verbunden, wobei die elektrischen Leitungen auch Datenleitungen umfassen können, die entsprechende Kontakte der Steckverbinder bzw. separate Steckverbinder miteinander verbinden. Der mindestens eine weitere Verbraucher, der an den mindestens einen weiteren Verbrauchersteckverbinder anschließbar ist, kann dadurch mit einer von der Bordnetzspannung verschiedenen Versorgungsspannung, die vom Netzteil bereitgestellt wird, versorgt werden. Hierdurch wird es ermöglicht, einen oder mehrere weitere Verbraucher, die beispielsweise an unterschiedlichen Positionen eines Fluggastsitzes oder an mehreren Fluggastsitzen angeordnet sein können, über das Netzteil mit elektrischer Energie zu versorgen, wobei etwa bei einem Defekt das Netzteil ausgetauscht werden kann, ohne die Steckverbinder der betreffenden Verbraucher zu lösen.

Gemäß einer besonders bevorzugten Ausführungsform der Erfindung ist der mindestens eine weitere Verbrauchersteckverbinder zur uni- oder bidirektionalen Datenübertragung mit der Verbrauchereinheit verbindbar, insbesondere über den Verbrauchersteckverbinder der Verbindungseinheit und den Versorgungssteckverbinder der Verbrauchereinheit. Hierdurch kann es ermöglicht werden, einen an den mindestens einen weiteren Verbrauchersteckverbinder angeschlossenen weiteren Verbraucher aufgrund von Daten zu steuern, die von der Verbrauchereinheit bereitgestellt werden oder die Verbrauchereinheit aufgrund von Daten des weiteren Verbrauchers zu betreiben. Die Verbrauchereinheit kann wie zuvor beschrieben zur Datenverbindung mit dem mindestens einen Eingangssteckverbinder oder ggf. mit einem zum Anschluss an das Datennetz des Luftfahrzeugs dienenden weiteren Steckverbinder verbindbar sein. In besonders bevorzugter Weise kann jeweils zur uni- oder bidirektionalen Datenübertragung sowohl eine entsprechende elektrische Verbindung des mindestens einen weiteren Verbrauchersteckverbinders mit der Verbrauchereinheit als auch eine Verbindung der Verbrauchereinheit und eine Verbindung des mindestens einen weiteren Verbrauchersteckverbinders mit dem mindestens einen Eingangs-steckverbinder oder ggf. mit einem zum Anschluss an das Datennetz des Luftfahrzeugs dienenden weiteren Steckverbinder vorgesehen sein. Hierdurch wird ein verbesserter Betrieb unterschiedlicher weiterer Verbraucher ermöglicht, die an das elektrische Gerät angeschlossen werden können.

In besonders bevorzugter Weise erfolgt die Datenübertragung vom und zum Datennetz des Luftfahrzeugs über die gleichen Kontakte, insbesondere zwei gleiche Kontakte, wie die Energieversorgung, während der mindestens eine weitere Verbraucher über unterschiedliche Kontakte oder Steckverbinder mit elektrischer Energie versorgt wird und mit dem Datennetz verbunden werden kann. Hierfür kann die Verbrauchereinheit, die beispielsweise ein Netzteil sein kann, zum Trennen eines Datenstroms von der Versorgungsspannung ausgebildet sein und ein entsprechendes Filter aufweisen. Hierdurch ist eine besonders einfache Ausführung erzielbar.

Vorzugsweise umfasst die Verbindungseinheit mindestens ein elektrisches Sicherungselement zum Unterbrechen mindestens einer Verbindung zwischen dem Eingangs-, dem Ausgangs- und/oder dem Verbrauchersteckverbinder. Ebenso kann ein Sicherungselement zum Unterbrechung einer Verbindung des weiteren Verbrauchersteckverbinders vorgesehen sein. Insbesondere ist das mindestens eine elektrische Sicherungselement zum Unterbrechen einer Verbindung zwischen dem Eingangs-steckverbinder und dem Verbrauchersteckverbinder geschaltet. Vorzugsweise ist das elektrische Sicherungselement auf einer Innenseite des Verbindergehäuses befestigt und mit einem außenseitig angeordneten Schalter betätigbar. Hierdurch kann auf einfache Weise eine Trennung des Verbrauchers vom Bordnetz erreicht werden, ohne einen der Steckverbinder zu lösen.

Gemäß einer bevorzugten Ausführungsform der Erfindung ist das Verbindergehäuse winkelförmig ausgebildet, beispielsweise L-förmig. Hierdurch wird es insbesondere ermöglicht, ein elektrisches Sicherungselement aufzunehmen, das in der Regel an einer Vorderseite des Verbindergehäuses angeordnet ist und von dieser in die Tiefe eine Erstreckung von einigen Zentimetern aufweist, während für die Aufnahme der Steckverbinder und der elektrischen Leitungen zur Verbindung der Steckverbinder miteinander eine geringere Tiefe des Verbindergehäuses benötigt wird. Das Verbindergehäuse kann hierfür beispielsweise die Form zweiter aneinander gesetzter Quader mit gleicher Höhe und unterschiedlicher Tiefe haben. Der durch die winkelförmige Gestaltung ausgebildete einspringende Winkel, der bei einer L-förmigen Gestaltung insbesondere ein rechter Winkel ist, kann an eine mit einem entsprechenden Winkel ausgestaltete Ecke des Verbrauchergehäuses ansetzbar sein, so dass zwei ebene Flächen des Verbindergehäuses, die sich an den Winkel anschließen, an entsprechenden ebenen Flächen des Verbrauchergehäuses anliegen. Durch die winkelförmige Ausbildung des Verbindergehäuses kann somit zudem ein besonders sicherer Sitz des Verbindergehäuses an dem Verbrauchergehäuse ermöglicht werden.

Gemäß einer weiteren bevorzugten Ausführungsform der Erfindung sind das Verbindergehäuse und das Verbrauchergehäuse jeweils näherungsweise derart quaderförmig ausgebildet, dass sie zum Herstellen einer elektrischen Verbindung jeweils mit einer Fläche aneinander angesetzt werden können, so dass sie gemeinsam ebenfalls näherungsweise Quaderform haben und in dieser Gestalt mechanisch miteinander verbunden werden können. Hierdurch wird eine besonders kompakte und stabile Anordnung geschaffen.

In vorteilhafter Weise kann die Verbindungseinheit eine elektronische Steuerungseinrichtung umfassen. Diese kann beispielsweise einen Mikrocontroller umfassen, der den Betrieb des der Verbrauchereinheit zugeordneten Verbrauchers und/oder weiterer Verbraucher, die an den weiteren Verbrauchersteckverbindern angeschlossen sein können, steuert. In besonders bevorzugter Weise ist die elektronische Steuerungseinrichtung zur uni- oder bidirektionalen Datenübertragung mit dem der Verbrauchereinheit zugeordneten Verbraucher und/oder den weiteren Verbrauchersteckverbindern verbunden sowie über den Eingangssteckverbinder oder einen für die Datenübertragung bestimmten weiteren Steckverbinder der Verbindungseinheit mit dem Datennetz des Luftfahrzeugs verbindbar. Alternativ kann es vorgesehen sein, dass die elektronische Steuerungseinrichtung der Verbrauchereinheit zugeordnet ist. Hierdurch kann eine Steuerung der genannten Verbraucher durch ein übergeordnetes Steuerungssystem des Luftfahrzeugs ermöglicht werden, ebenso wie die Erfassung von Daten der Verbraucher.

Eine erfindungsgemäße Geräteanordnung für ein Luftfahrzeug umfasst ein erstes elektrisches Gerät, das an das Bordnetz des Luftfahrzeugs anschließbar ist und ein zweites elektrisches Gerät, das an das erste elektrische Gerät angeschlossen ist. Das erste elektrische Gerät und das zweite elektrische Gerät sind jeweils wie oben beschrieben ausgebildet. Das erste elektrische Gerät ist mit seinem Eingangssteckverbinder an das Bordnetz anschließbar, d.h. beispielsweise über ein Kabel mit dem Bordnetz verbindbar. Das zweite elektrische Gerät ist mit seinem Eingangssteckverbinder an den Ausgangssteckverbinder des ersten elektrischen Geräts angeschlossen, d.h. der Eingangssteckverbinder des zweiten elektrischen Geräts ist unmittelbar oder auch beispielsweise lediglich über ein Kabel mit dem mindestens einen Ausgangssteckverbinder des ersten elektrischen Geräts verbunden. Über die Verbindungseinheit des ersten elektrischen Geräts ist somit der mindestens eine elektrische Verbraucher des ersten elektrischen Geräts mit dem Bordnetz verbindbar und kann dadurch mit elektrischer Energie versorgt werden. Der mindestens eine elektrische Verbraucher des zweiten elektrischen Geräts ist über die Verbindungseinheit des zweiten elektrischen Geräts und die Verbindungseinheit des ersten elektrischen Geräts mit dem Bordnetz verbindbar und kann dadurch mit elektrischer Energie versorgt werden. Weiterhin kann in entsprechender Weise ein drittes elektrisches Gerät an das zweite elektrische Gerät angeschlossen sein sowie ein oder mehrere weitere elektrische Geräte, wobei jeweils ein nachfolgendes Gerät an die Verbindungseinheit des vorangehenden Gerät angeschlossen ist. Hierdurch können die jeweiligen Verbraucher zur Versorgung mit elektrischer Energie mit dem Bordnetz verbunden werden. Dabei kann zugleich eine Datenverbindung des zweiten bzw. dritten oder weiterer elektrischer Geräte mit dem Datennetz des Luftfahrzeugs herstellbar sein.

Die erfindungsgemäße Geräteanordnung ist vorzugsweise zur Befestigung an einem oder mehreren Fluggastsitzen ausgebildet. Dabei kann es insbesondere vorgesehen sein, dass an jedem Fluggastsitz genau ein Gerät befestigt ist oder dass beispielsweise an jedem Fluggastsitz zwei oder auch drei Geräte der Geräteanordnung befestigt werden, die jeweils unterschiedlichen Funktionen des Fluggastsitzes zugeordnet sind, etwa eines den elektronischen Unterhaltungseinrichtungen und eines der motorischen Sitzverstellung sowie ggf. eines der Beleuchtung und weiteren zusätzlichen Funktionen.

An eine erfindungsgemäße Geräteanordnung, die ein erstes und ein zweites elektrisches Gerät umfasst, die wie oben beschrieben ausgebildet sind, kann an den Ausgangssteckverbinder des zweiten elektrischen Geräts ein elektrisches Gerät angeschlossen werden, das keinen Ausgangssteckverbinder aufweisen muss. Ein solches elektrisches Gerät, das im Folgenden als "Endgerät" bezeichnet wird und das ebenfalls ein Gegenstand der vorliegenden Erfindung ist, ist im Übrigen wie das oben beschriebene erfindungsgemäße elektrische Gerät ausgebildet. Insbesondere umfasst das Endgerät mindestens einen elektrischen Verbraucher sowie mindestens einen Eingangssteckverbinder, der mit einem Bordnetz eines Luftfahrzeugs verbindbar ist, eine Verbrauchereinheit, die mindestens einen elektrischen Verbraucher umfasst, und eine Verbindungseinheit, die den mindestens einen Eingangssteckverbinder aufweist, wobei die Verbrauchereinheit mindestens einen Versorgungssteckverbinder aufweist, der mit dem mindestens einen Verbraucher verbunden ist, und die Verbindungseinheit mindestens einen Verbrauchersteckverbinder aufweist, der mit dem mindestens einen Eingangssteckverbinder verbunden ist, wobei der mindestens eine Versorgungssteckverbinder mit dem mindestens einen Verbrauchersteckverbinder lösbar zusammensteckbar ist und wobei die Verbindungseinheit an der Verbrauchereinheit lösbar befestigt ist. Dadurch wird es ermöglicht, eine Verbrauchereinheit mit dem Bordnetz des Luftfahrzeugs zu verbinden, die unabhängig von dem jeweiligen Luftfahrzeug und dessen Steckersystem bzw. den für dieses geltenden Normen ausgebildet ist. Die Verbindungseinheit des Endgeräts kann einen oder mehrere weitere Verbrauchersteckverbinder zum Anschluss eines oder mehrerer weiterer Verbraucher aufweisen und/oder in entsprechender Weise wie oben beschrieben zur Datenübertragung ausgebildet sein.

Die vorliegende Erfindung betrifft auch eine Geräteanordnung, die wie oben beschrieben ausgebildet ist und die zusätzlich ein derartiges Endgerät umfasst, das an den Ausgangssteckverbinder des zweiten elektrischen Geräts oder eines weiteren, dem zweiten elektrischen Gerät nachfolgenden Geräts angeschlossen ist, d.h. der Eingangssteckverbinder des Endgeräts ist unmittelbar oder auch beispielsweise lediglich über ein Kabel mit dem mindestens einen Ausgangssteckverbinder des zweiten oder des weiteren elektrischen Geräts verbunden. Ebenso betrifft die Erfindung auch eine Geräteanordnung, die ein erstes elektrisches Gerät, das wie oben beschrieben ausgebildet ist, und ein wie zuvor beschrieben ausgebildetes Endgerät umfasst, das mit seinem Eingangssteckverbinder an den Ausgangssteckverbinder des ersten elektrischen Geräts angeschlossen ist, d.h. unmittelbar oder beispielsweise nur über ein Kabel mit diesem verbunden ist. Dadurch können der mindestens eine elektrische Verbraucher des ersten elektrischen Geräts über die Verbindungseinheit des ersten elektrischen Geräts und der mindestens eine elektrische Verbraucher des Endgeräts über die Verbindungseinheit des ersten elektrischen Geräts und die des Endgeräts mit dem Bordnetz des Luftfahrzeugs verbunden werden. Insbesondere umfasst eine solche Geräteanordnung nur zwei elektrische Geräte, nämlich das erste elektrische Gerät und das Endgerät.

Eine erfindungsgemäße Verbindungseinheit ist zum Verbinden mindestens eines elektrischen Verbrauchers eines Luftfahrzeugs mit einem Bordnetz des Luftfahrzeugs ausgebildet und weist mindestens einen Eingangssteckverbinder und mindestens einen Ausgangssteckverbinder auf, wobei der mindestens eine Ausgangssteckverbinder mit dem mindestens einen Eingangssteckverbinder verbunden ist. Der mindestens eine Eingangssteckverbinder ist direkt oder indirekt mit dem Bordnetz verbindbar. Weiter ist die Verbindungseinheit mit einem Datennetz des Luftfahrzeugs verbindbar, beispielsweise über den Eingangssteckverbinder oder einen weiteren Steckverbinder, der zur Verbindung mit dem Datennetz ausgebildet ist. Erfindungsgemäß weist die Verbindungseinheit mindestens einen Verbrauchersteckverbinder zum Verbinden des mindestens einen elektrischen Verbrauchers mit der Verbindungseinheit auf, wobei der mindestens eine Verbrauchersteckverbinder mit dem mindestens einen Eingangssteckverbinder verbunden ist. Insbesondere ist die Verbindungseinheit wie oben beschrieben ausgebildet.

Die Erfindung betrifft ferner die Verbindungseinheit eines Endgeräts, das wie oben beschrieben ausgebildet ist. Insbesondere ist die Verbindungseinheit des Endgeräts zum Verbinden mindestens eines elektrischen Verbrauchers des Endgeräts mit einem Bordnetz eines Luftfahrzeugs ausgebildet und weist mindestens einen Eingangs-steckverbinder auf, der direkt oder indirekt mit dem Bordnetz verbindbar ist, und mindestens einen Verbrauchersteckverbinder zum Verbinden des mindestens einen elektrischen Verbrauchers mit der Verbindungseinheit, wobei der mindestens eine Verbrauchersteckverbinder mit dem mindestens einen Eingangssteckverbinder verbunden ist. Die Verbindungseinheit des Endgeräts weist vorzugsweise keinen Ausgangssteckverbinder auf. In vorteilhafter Weise umfasst die Verbindungseinheit des Endgeräts mindestens ein elektrisches Sicherungselement zum Unterbrechen mindestens einer Verbindung zwischen dem Eingangssteckverbinder und dem Verbrauchersteckverbinder.

Ein erfindungsgemäßer Fluggastsitz umfasst mindestens ein elektrisches Gerät, das wie oben beschrieben ausgebildet ist. Insbesondere ist das mindestens eine elektrische Gerät an einer Tragstruktur des Fluggastsitzes befestigt. Hierfür können an der Tragstruktur des Fluggastsitzes Befestigungsmittel vorhanden sein, mit denen beispielsweise die Verbrauchereinheit, mit der die Verbindungseinheit verbunden ist, am Fluggastsitz befestigt ist. Weiterhin kann der Fluggastsitz einen oder mehrere weitere Verbraucher umfassen, die an die weiteren Verbrauchersteckverbinder der Verbindungseinheit angeschlossen sind.

Eine erfindungsgemäße Baureihe von elektrischen Geräten für Luftfahrzeuge umfasst ein erstes elektrisches Gerät und ein zweites elektrisches Gerät, die jeweils wie oben beschrieben ausgebildet sind und wobei die jeweiligen Verbrauchereinheiten in übereinstimmender Weise ausgebildet sind, jedoch die jeweiligen Verbindungseinheiten voneinander abweichend ausgebildet sind. Die Verbindungseinheit des ersten Geräts und die Verbindungseinheit des zweiten Geräts weisen unterschiedliche Eingangssteckverbinder auf, vorzugsweise auch unterschiedliche Ausgangssteckverbinder. Dabei kann beispielsweise die Dimensionierung der Steckverbinder und/oder die Belegung der Kontakte der Steckverbinder unterschiedlich sein. Die Steckverbinder können auch für unterschiedliche Bordnetzspannungen geeignet sein. Die Baureihe kann weitere erfindungsgemäß ausgebildete elektrische Geräte umfassen, deren Verbindungseinheiten mit denen des ersten oder des zweiten elektrischen Geräts übereinstimmend oder von beiden abweichend ausgebildet sein können; die Verbrauchereinheiten der weiteren Geräte können übereinstimmend oder abweichend von denen des ersten und des zweiten Geräts ausgebildet sein. Hierdurch wird eine Baureihe geschaffen, die die Ausrüstung von Luftfahrzeugen ermöglicht, für die unterschiedliche Steckersysteme bzw. Normen gelten, wobei zur Erfüllung übereinstimmender Funktionen übereinstimmend ausgebildete Verbrauchereinheiten vorgesehen sind; dadurch können die Entwicklung, Zulassung, Herstellung, Beschaffung und Lagerhaltung vereinfacht werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Aspekte der Erfindung ergeben sich aus der nachfolgenden Beschreibung bevorzugter Ausführungsbeispiele und der beigefügten Zeichnung. Es zeigen:
Fig. 1 ein erstes Ausführungsbeispiel eines erfindungsgemäßen elektrischen Geräts mit getrennt dargestellter Verbindungs- und Verbrauchereinheit;
Fig. 2 einen Ausschnitt aus einer beispielhaft gezeigten erfindungsgemäßen Geräteanordnung gemäß dem ersten Ausführungsbeispiel;
Fig. 3 einen vereinfachten Schaltplan einer Verbindungseinheit eines elektrischen Geräts gemäß dem ersten Ausführungsbeispiel der Erfindung;
Fig. 4 ein zweites Ausführungsbeispiel eines erfindungsgemäßen elektrischen Geräts mit einem überlagerten vereinfachten Blockschaltbild.

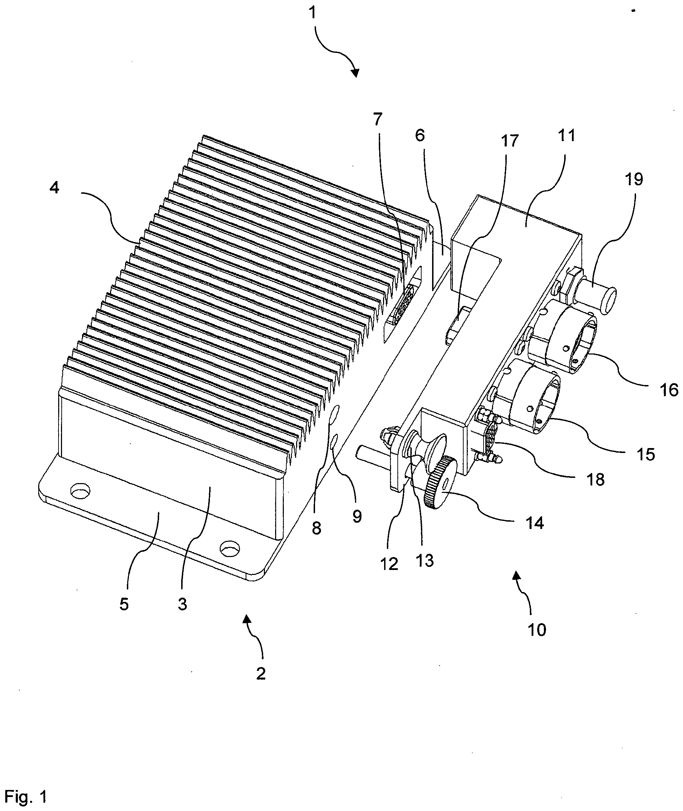

In Fig. 1 ist ein elektrisches Gerät gemäß einem ersten Ausführungsbeispiel der Erfindung in einer Schrägansicht gezeigt. Das in Figur 1 exemplarisch dargestellte elektrische Gerät 1 ist zur Befestigung an einem Fluggastsitz, beispielsweise unter der Sitzfläche des Fluggastsitzes, ausgelegt. Das elektrische Gerät 1 umfasst eine Verbrauchereinheit 2 und eine Verbindungseinheit 10, die in Fig. 1 nicht miteinander verbunden dargestellt sind. Die Verbrauchereinheit 2 weist ein im Wesentlichen allseitig geschlossenes Gehäuse auf, das hier als Verbrauchergehäuse 3 bezeichnet wird, und einen oder mehrere innerhalb des Verbrauchergehäuses 3 angeordnete, in Fig. 1 nicht sichtbare elektrische Verbraucher. Die Verbraucher können beispielsweise ein Netzteil, eine elektronische Steuerungseinrichtung für Aktuatoren des Fluggastsitzes und/oder eine Steuerungseinrichtung für Unterhaltungseinrichtungen des Fluggastsitzes sein und elektrische und elektronische Komponenten, beispielsweise auch Mikroprozessoren, enthalten. Zur Abführung der von den Verbrauchern erzeugten Verlustwärme weist das Gehäuse 3 Kühlrippen 4 auf. Das Gehäuse 3 weist ferner einander gegenüberliegende Befestigungslaschen 5, 6 auf, mit denen die Verbrauchereinheit 2 an einer Tragstruktur des Fluggastsitzes befestigt werden kann, beispielsweise mit Klemm- oder Schraubverbindungen. An dem Gehäuse 3 befestigt, jedoch in dieses eingesenkt, ist ein Steckverbinder 7, dessen Kontakte mit dem Verbraucher bzw. den Verbrauchern der Verbrauchereinheit 2 verbunden sind. Die Verbrauchereinheit 2 kann eine oder mehrere Kabel- oder Steckverbindungen zum Anschluss externer Verbraucher oder weiterer elektrischer oder elektronischer Komponenten aufweisen, beispielsweise zum Anschluss eines Bildschirms, einer Lampe, eines Aktuators oder von Bedienelementen (in Fig. 1 nicht dargestellt).

Die Verbindungseinheit 10 weist ein im Wesentlichen allseitig geschlossenes Gehäuse auf, das hier als Verbindergehäuse 11 bezeichnet wird. Das Verbindergehäuse 11 der Verbindungseinheit 10 weist eine Befestigungslasche 12 auf, die Verbindungsmittel trägt, mit denen die Verbindungseinheit 10 an der Verbrauchereinheit 2 befestigt werden kann. Exemplarisch sind in Fig.1 ein als Schnellverschluss wirkender Klemmverbinder 13 und eine Rändelschraube 14 dargestellt, die jeweils in entsprechend ausgebildete Bohrungen 8, 9 des Verbrauchergehäuses 3 eingreifen können. Insbesondere können zum Befestigen der Verbindungseinheit 10 an der Verbrauchereinheit 2 ausschließlich ein oder mehrere Klemmverbinder 12 oder auch ausschließlich ein oder mehrere Schraubverbindungen mit Rändelschrauben 13 vorgesehen sein; ferner kann das Verbindergehäuse 11 eine Mehrzahl von Befestigungslaschen 12 aufweisen (in Fig. 1 nicht gezeigt). Das Verbindergehäuse 11 trägt einen ersten Steckverbinder 15, der als Eingangssteckverbinder dient, und einen zweiten Steckverbinder 16, der als Ausgangssteckverbinder dient.

Weiter trägt das Verbindergehäuse 11 einen dritten Steckverbinder 17 zur Verbindung mit der Verbrauchereinheit 2, der auf den Steckverbinder 7 der Verbrauchereinheit 2 aufsteckbar ist. Zusätzlich kann die Verbindungseinheit einen weiteren Steckverbinder 18 aufweisen. Schließlich umfasst die Verbindungseinheit 10 in dem dargestellten Ausführungsbeispiel einen Leitungsschutzschalter 19 (Circuit Breaker). Das Verbindergehäuse 11 der Verbindungseinheit 10 ist L-förmig ausgebildet und liegt in mit dem Verbrauchergehäuse 3 verbundenem Zustand mit der Innenseite der L-Form an der Außenseite des Verbrauchergehäuses 3 an. Dabei ist zugleich der Steckverbinder 17 der Verbindungseinheit 10 auf den Steckverbinder 7 der Verbrauchereinheit 2 aufgesteckt, so dass mit der Herstellung der mechanischen Verbindung zwischen der Verbindungseinheit 10 und der Verbrauchereinheit 2 zugleich auch die elektrische Verbindung der Verbindungseinheit 10 mit der Verbrauchereinheit 2 hergestellt wird. Die Verbindungseinheit 10 muss nicht über Befestigungsmittel zur Befestigung an dem Fluggastsitz verfügen, sondern kann durch die Befestigung an der Verbrauchereinheit 2 ausreichend sicher gehalten werden.

Über die durch den Steckverbinder 7 der Verbrauchereinheit 2 und den Steckverbinder 17 der Verbindungseinheit 10 gebildete Steckverbindung sind alle elektrischen Leitungen, mit denen der oder die elektrischen Verbraucher der Verbrauchereinheit 2 mit dem Bordnetz des Flugzeugs verbunden sind, geführt. Hierzu sind die Kontakte des Steckverbinders 7 der Verbrauchereinheit 2 mit dem bzw. den Verbrauchern verbunden und die Kontakte des Steckverbinders 17 über innerhalb des Verbindergehäuses 11 verlaufende Leitungen mit dem als Eingangssteckverbinder dienenden ersten Steckverbinder 15 verbunden. Über diese Verbindungen erfolgt zumindest die elektrische Energieversorgung des bzw. der Verbraucher der Verbrauchereinheit 2. Darüber hinaus können über den Steckverbinder 7 der Verbrauchereinheit 2, den Steckverbinder 17 und den ersten Steckverbinder 15 auch Datenleitungen zur Steuerung der Verbraucher oder weiterer Funktionen des Fluggastsitzes verlaufen. Solche Datenleitungen können alternativ oder zusätzlich beispielsweise über den weiteren Steckverbinder 18 geführt sein. Um die Energieversorgung und gegebenenfalls die Datenübertragung zu einem weiteren elektrischen Gerät über den als Ausgangssteckverbinder dienenden zweiten Steckverbinder 16 zu ermöglichen, sind die Kontakte des zweiten Steckverbinders 16 über ebenfalls innerhalb des Verbindergehäuses 11 verlaufende elektrische Leitungen mit Kontakten des ersten Steckverbinders 15 verbunden. Der Leitungsschutzschalter 19 ermöglicht eine elektrische Trennung des Steckverbinders 17 von dem ersten Steckverbinder 15 durch Unterbrechung mindestens einer die Netzspannung führenden elektrischen Leitung. Die elektrischen Leitungen innerhalb des Gehäuses 11 der Verbindungseinheit 10 können beispielsweise mit Drähten oder Leiterplatten ausgebildet sein.

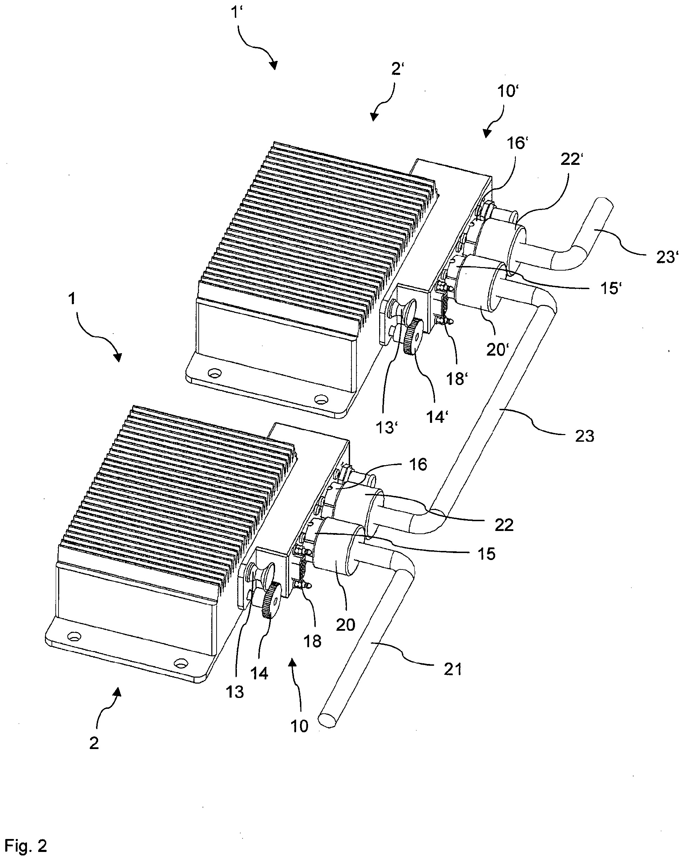

In Fig. 2 ist ein Ausschnitt einer Anordnung einer Mehrzahl von elektrischen Geräten eines Luftfahrzeugs gezeigt, die jeweils wie das zu Fig. 1 beschriebene elektrische Gerät 1 ausgebildet sind und die in Reihe geschaltet sind (Daisy Chaining). In Fig. 2 sind zwei elektrische Geräte 1,1' dargestellt, es können jedoch auch mehr Geräte in entsprechender Weise in Reihe geschaltet sein.

Das erste elektrische Gerät 1 besteht aus einer Verbrauchereinheit 2 und einer Verbindungseinheit 10, und das zweite elektrische Gerät 1' aus einer Verbrauchereinheit 2' und einer Verbindungseinheit 10'; auch die weiteren, nicht dargestellten elektrischen Geräte der in Fig. 2 ausschnittsweise gezeigten Anordnung bestehen jeweils aus einer Verbrauchereinheit und einer Verbindungseinheit. Die Verbindungseinheiten 10, 10' des ersten und des zweiten elektrischen Geräts 1, 1', wie auch der weiteren, nicht dargestellten elektrischen Geräte der Anordnung sind baugleich zueinander ausgebildet, während die jeweiligen Verbrauchereinheiten 2, 2' unterschiedlich ausgestaltet sein können, insbesondere unterschiedliche Verbraucher umfassen können. Die Verbindungseinheiten 10, 10' sind dabei an das Steckersystem des Luftfahrzeugs angepasst, was für die jeweiligen Verbrauchereinheiten 2, 2' nicht unbedingt notwendig ist.

Wie in Fig. 2 gezeigt, ist auf den ersten Steckverbinder 15 des ersten elektrischen Geräts 1 ein Gegensteckverbinder 20 eines Kabels 21 aufgesteckt. Auf den zweiten Steckverbinder 16 des ersten elektrischen Geräts 1 ist ein Gegensteckverbinder 22 eines Kabels 23 aufgesteckt, das an seinem anderen Ende mit einem Gegensteckverbinder 20' auf den ersten Steckverbinder 15' des zweiten elektrischen Geräts 1' aufgesteckt ist. Auf den zweiten Steckverbinder 16' des zweiten elektrischen Geräts 1' ist mit einem Gegensteckverbinder 22' ein weiteres Kabel 23' aufgesteckt. Die Gegensteckverbinder 20, 20', 22, 22' können zur Sicherung der Steckverbindungen jeweils verriegelt sein. Die Verbindungseinheiten 10, 10' der elektrischen Geräte 1, 1' sind an die Verbrauchereinheit 2, 2' des jeweiligen Geräts 1, 1' angesetzt und an dieser mit mindestens einem Klemmverbinder 13, 13' und/oder mindestens einer Rändelschraube 14, 14' befestigt. Gleichzeitig ist jeweils der dritte Steckverbinder 17 der Verbindungseinheit 10, 10' in den Steckverbinder 7 der Verbrauchereinheit 2, 2' eingesteckt (s. Fig. 1). Hierdurch sind ein oder mehrere Verbraucher der Verbrauchereinheit 2, 2' mit der zugehörigen Verbindungseinheit 10, 10' elektrisch verbunden; die elektrische Verbindung ist durch den Klemmverbinder 13, 13' bzw. die Rändelschraube 14, 14' zusätzlich gesichert.

Das erste elektrische Gerät 1 ist über das Kabel 21 ohne Zwischenschaltung eines weiteren Geräts an einen entsprechenden Steckverbinder des Bordnetzes des Luftfahrzeugs angeschlossen oder an eine entsprechend ausgebildete Verbindungseinheit eines weiteren, in der Geräteanordnung dem ersten Gerät 1 vorgeschalteten Geräts angeschlossen und dadurch mit dem Bordnetz verbunden. Das zweite elektrische Gerät 1' ist über das Kabel 23 an das erste elektrische Gerät 1 angeschlossen und hierdurch mit dem Bordnetz verbunden. Ein weiteres, in Fig. 2 nicht gezeigtes elektrisches Gerät ist über das Kabel 23' an das zweite elektrische Gerät 1' angeschlossen und auf diese Weise mit dem Bordnetz verbunden; entsprechendes gilt ggf. für weitere in der Reihenschaltung nachfolgende Geräte. Hierdurch werden der eine oder die mehreren Verbraucher der jeweiligen Verbrauchereinheit 2, 2' mit dem Bordnetz verbunden und mit elektrischer Energie versorgt. Zusätzlich kann über die Kabel 21, 23, 23' oder auch über die weiteren Steckverbinder 18, 18' und ein an diese anschließbares Kabel eine Datenübertragung stattfinden. Die Kabel 21, 23, 23' können jeweils baugleich sein oder sich nur in ihrer Länge unterscheiden; sofern das erste elektrische Gerät 1 das erste in der Reihenschaltung ist, kann das Kabel 21 zum Anschluss an den entsprechenden Steckverbinder des Bordnetzes auch einen entsprechend unterschiedlich gestalteten Steckverbinder aufweisen.

Die Geräte 1, 1' können jeweils an einem Fluggastsitz befestigt sein, wobei die jeweilige Verbrauchereinheit 2, 2' beispielsweise die Netzteile aller am Fluggastsitz vorgesehenen elektrischen und elektronischen Geräte umfassen kann. Es kann aber auch vorgesehen sein, dass mehrere der in Reihe geschalteten Geräte 1, 1' an einem Fluggastsitz befestigt sind.

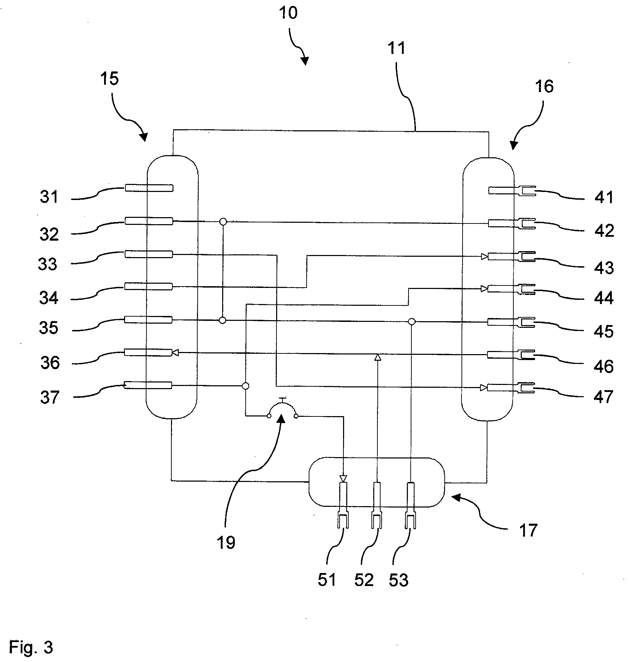

In Fig. 3 ist in vereinfachter Form ein Schaltplan der Verbindungseinheit 10 gezeigt, die gemäß dem in Fig. 1 dargestellten Ausführungsbeispiel der Erfindung ausgebildet ist. Die Verbindungseinheit 10 weist ein Verbindergehäuse 11 auf, in das der erste Steckverbinder 15, der zweite Steckverbinder 16 und der dritte Steckverbinder 17 eingesetzt sind und innerhalb dessen die elektrischen Verbindungsleitungen verlaufen. Innerhalb des Verbindergehäuses ist ferner der Leitungsschutzschalter 19 angeordnet. Im dargestellten Ausführungsbeispiel weisen der erste Steckverbinder 15 und der zweite Steckverbinder 16 jeweils sieben Kontakte 31, 32, 33, 34, 35, 36, 37, 41, 42, 43, 44, 45, 46, 47 auf, die als Stifte oder Buchsen ausgebildet sind. Von dem Steckverbinder 17 sind lediglich drei Kontakte symbolisch dargestellt.

An den Kontakten 33, 34 und 37 des als Eingangs-Steckverbinder dienenden ersten Steckverbinders 15 liegen die drei Phasen des Drehstrom-Bordnetzes des Luftfahrzeugs an, die mit den entsprechenden Kontakten 43, 44, 47 des als AusgangsSteckverbinders 16 dienenden zweiten Steckverbinders 16 verbunden sind. Dabei können die Phasen untereinander vertauscht sein, wie dies in Fig. 3 gezeigt ist, um eine gleichmäßigere Belastung der drei Phasen zu erreichen. Die an dem Kontakt 37 anliegende Phase ist über den Leitungsschutzschalter 19 mit dem Kontakt 51 des Steckverbinders 17 verbunden, um den bzw. die Verbraucher der Verbrauchereinheit, die an den Steckverbinder 17 der Verbindungseinheit 10 angeschlossen wird, mit Wechselspannung aus dem Drehstrom-Bordnetz des Luftfahrzeugs zu versorgen; diese Verbindung kann mittels des Leitungsschutzschalters 19 unterbrochen werden. Der Nullleiter verläuft über den Kontakt 36 des ersten Steckverbinders 15 und den Kontakt 46 des zweiten Steckverbinders 16 sowie den Kontakt 52 des Steckverbinders 17. Die Kontakte 32, 35 des ersten Steckverbinders 15 und die Kontakte 42, 45 des zweiten Steckverbinders 16 sowie der Kontakt 53 des Steckverbinder 17 vermitteln die Schutzerde. Sofern das Verbindergehäuse 11 bzw. das Verbrauchergehäuse 3 (s. Fig. 1, 2) metallisch ausgebildet sind, kann die Schutzerde mit dem jeweiligen Gehäuse verbunden sein. Der Kontakt 31 des ersten Steckverbinders 15 und der Kontakt 41 des zweiten Steckverbinders 16 sind nicht belegt.

Mit der in Fig. 3 beispielhaft dargestellten Ausgestaltung der elektrischen Verbindungen kann erreicht werden, dass über die Verbindungseinheit 10 sowohl eine Versorgung von einem oder mehreren elektrischen Verbrauchern der an den Steckverbinder 17 anschließbaren Verbrauchereinheit als auch eine Versorgung nachgeschalteter elektrischer Geräte, die entsprechende Verbindungseinheiten umfassen, mit elektrischer Energie aus dem Bordnetz des Luftfahrzeugs ermöglicht wird. Da die Verbindungseinheit 10 somit nur eine Verdrahtung und den Leitungsschutzschalter 19 umfasst und insbesondere keine elektronischen Bauteile und keine sonstigen elektrischen Verbraucher, sind die in Luftfahrzeugen, insbesondere innerhalb der Kabine von Passagierflugzeugen, geltenden Sicherheitsvorschriften besonders leicht zu erfüllen.

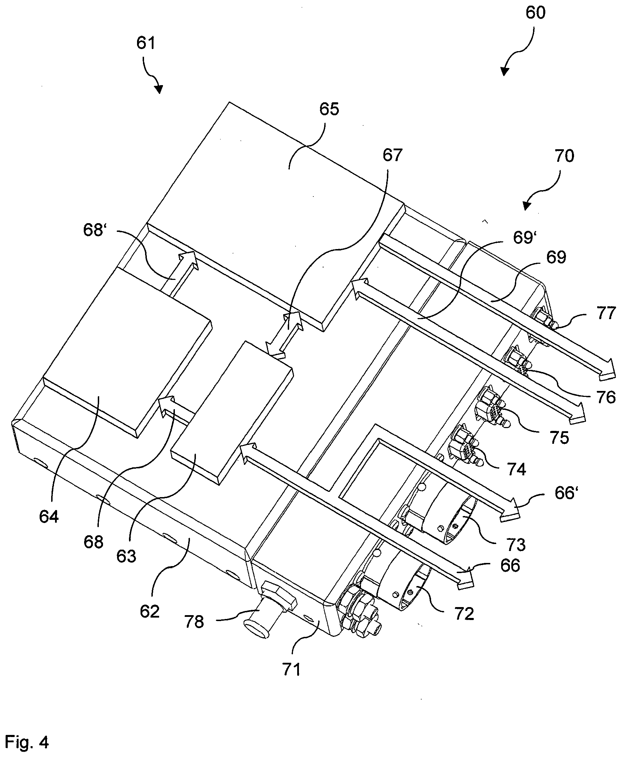

In Fig. 4 ist ein elektrisches Gerät 60 gemäß einem zweiten Ausführungsbeispiel der Erfindung in einer Schrägansicht mit einem symbolisch überlagerten, vereinfachten Blockschaltbild gezeigt. Das elektrische Gerät 60 ist ebenfalls zur Befestigung an einem Fluggastsitz, etwa unter der Sitzfläche des Fluggastsitzes, ausgelegt, wofür entsprechende Befestigungsmittel an dem elektrischen Gerät 60 und/oder an einer Tragstruktur des Fluggastsitzes vorgesehen sein können, beispielsweise wie beim ersten Ausführungsbeispiel (s. Fig. 1; in Fig. 4 nicht dargestellt).

Das elektrische Gerät 60 umfasst eine Verbrauchereinheit 61 und eine Verbindungseinheit 70, die in Fig. 4 miteinander verbunden dargestellt sind. Wie in Fig. 4 gezeigt ist, liegen dabei die Verbrauchereinheit 61 und die Verbindungseinheit 70, die jeweils etwa Quaderform haben, mit ihren einander zugeordneten Flächen aneinander an. Zum Verbinden der Verbrauchereinheit 61 und der Verbindungseinheit 70 können nicht dargestellte mechanische Verbindungsmittel dienen, die etwa, wie zum ersten Ausführungsbeispiel beschrieben, als Klemmverbinder und/oder Schraubverbindung ausgebildet sein können.

Die Verbrauchereinheit 61 weist ein im Wesentlichen allseitig geschlossenes Verbrauchergehäuse 62 auf, in dem ein Verbraucher aufgenommen ist, der im gezeigten Ausführungsbeispiel ein Netzteil zum Erzeugen einer Gerätebetriebsspannung aus der Bordnetzspannung ist. An dem Verbrauchergehäuse 62 ist ein in Fig. 4 nicht sichtbarer Steckverbinder befestigt, dessen Kontakte mit dem Netzteil verbunden sind und der als Versorgungssteckverbinder zur Versorgung des Netzteils mit elektrischer Energie aus dem Bordnetz dient. Der Steckverbinder umfasst Kontakte zur Übertragung der Bordnetzspannung sowie ferner Kontakte zur Übertragung der Gerätebetriebsspannung und Kontakte für die Datenübertragung.

Die Verbindungseinheit 70 weist ein im Wesentlichen allseitig geschlossenes Verbindergehäuse 71 auf. Das Verbindergehäuse 71 trägt einen ersten Steckverbinder 72, der als Eingangssteckverbinder dient, und einen zweiten Steckverbinder 73, der als Ausgangssteckverbinder dient. Der erste und der zweite Steckverbinder weisen jeweils Kontakte zur Übertragung der Bordnetzspannung auf, die auch zur Datenübertragung dienen, wobei die Datenübertragung vom bzw. zum Datennetz des Luftfahrzeugs über einen Datenbus erfolgen kann, beispielsweise gemäß dem ARINC 485 - Standard. Ferner ist am Verbindergehäuse 71, in Fig. 4 nicht sichtbar, ein auf den Steckverbinder der Verbrauchereinheit 61 aufsteckbarer dritter Steckverbinder angeordnet, der als Verbrauchersteckverbinder zur elektrischen Verbindung mit der Verbrauchereinheit 61 dient. Weiter sind am Verbindergehäuse 71 weitere Steckverbinder 74, 75, 76, 77 befestigt, an die weitere Verbraucher angeschlossen werden können. Die weiteren Steckverbinder 74, 75, 76, 77 dienen zur Versorgung der weiteren Verbraucher mit der Gerätebetriebsspannung sowie zur Datenübertragung und weisen hierfür jeweils entsprechende Kontakte auf. Die weiteren Verbraucher können beispielsweise Aktuatoren für eine Verstellung des Fluggastsitzes, eine Lampe, ein Bildschirm und/oder Bedienelemente oder eine Steuerungseinrichtung für Unterhaltungseinrichtungen des Fluggastsitzes sein. Schließlich umfasst die Verbindungseinheit 70 einen Leitungsschutzschalter 78. Wenn die Verbrauchereinheit 61 und die Verbindungseinheit 70 mit den mechanischen Verbindungsmitteln miteinander verbunden sind, ist zugleich der dritte Steckverbinder der Verbindungseinheit 70 mit dem Steckverbinder der Verbrauchereinheit 61 verbunden.

In Fig. 4 ist symbolisch ein vereinfachtes Blockschaltbild überlagert. Wie das Blockschaltbild andeutet, umfasst das in dem Verbrauchergehäuse 62 angeordnete Netzteil ein Filter 63, ein Stromversorgungsteil 64 und einen Transceiver 65. Über den ersten Steckverbinder 72 kann das elektrische Gerät 60 mit einem Bordnetz und einem Datennetz des Flugzeugs verbunden werden, wobei die Datenübertragung über mindestens zwei Kontakte erfolgt, über die auch die Bordnetzspannung übertragen wird (Pfeil 66). Die Datenübertragung vom bzw. zum Datennetz des Luftfahrzeugs kann über einen Datenbus etwa gemäß dem ARINC 485 - Standard erfolgen. Über den dritten Steckverbinder der Verbindungseinheit 70 und den Steckverbinder der Verbrauchereinheit 61 wird die Bordnetzspannung zum Netzteil geleitet, wo durch das Filter 63 der höherfrequent aufmodulierte Datenstrom ausgekoppelt und zum Transceiver 65 geführt wird (Pfeil 67). Das Stromversorgungsteil 64 wandelt die Bordnetzspannung, beispielsweise 115 V Wechselspannung, in die Gerätebetriebsspannung, beispielsweise Gleichspannung, um und versorgt mit dieser den Transceiver 65 (Pfeile 68, 68'). Der Transceiver 65 leitet die Gerätebetriebsspannung (Pfeil 69) und den Datenstrom (Pfeil 69') über den Steckverbinder der Verbrauchereinheit 61 und den dritten Steckverbinder der Verbindungseinheit 70 zu den weiteren Verbrauchersteckverbindern weiter, über die weitere Verbraucher sowohl mit elektrischer Energie versorgt als auch zur bidirektionalen Datenkommunikation angeschlossen werden können. Die Bordnetzspannung mit dem aufmodulierten Datenstrom wird über innerhalb des Verbindergehäuses 71 verlaufende Leitungen zum zweiten Steckverbinder 73 weitergeleitet (Pfeil 66').

In entsprechender Weise, wie in Fig. 2 für das elektrische Gerät 1 gemäß dem ersten Ausführungsbeispiel gezeigt ist, kann das gemäß dem zweiten Ausführungsbeispiel ausgebildete elektrische Gerät 60 mit weiteren, übereinstimmend mit diesem ausgebildeten elektrischen Geräten in Reihe geschaltet sein. Dabei wird ein nachgeschaltetes elektrisches Gerät über ein Kabel mit einem entsprechenden Gegensteckverbinder an den zweiten Steckverbinder 73 angeschlossen und über diesen mit der Bordnetzspannung versorgt sowie eine Datenübertragung ermöglicht. Das elektrische Gerät 60 ist über ein an den ersten Steckverbinder 72 angeschlossenes Kabel mit dem Bordnetz und mit dem Datennetz des Flugzeugs verbunden oder an eine entsprechend ausgebildete Verbindungseinheit eines weiteren, in der Geräteanordnung dem Gerät 60 vorgeschalteten Geräts angeschlossen und dadurch mit dem Bordnetz und dem Datennetz verbunden. Die Verbindungseinheit 70 ist an das Steckersystem des Flugzeugs angepasst, was für die Verbrauchereinheit 61 sowie die weiteren anschließbaren Verbraucher nicht unbedingt notwendig ist.

Der Übersichtlichkeit halber sind nicht in allen Figuren alle Bezugszeichen dargestellt. Zu einer Figur nicht erläuterte Bezugszeichen haben die gleiche Bedeutung wie in den übrigen Figuren.

### Bezugszeichenliste

- 1, 1': Gerät
- 2, 2': Verbrauchereinheit
- 3: Verbrauchergehäuse
- 4: Kühlrippen
- 5: Befestigungslasche
- 6: Befestigungslasche
- 7: Steckverbinder
- 8: Bohrung
- 9: Bohrung
- 10, 10': Verbindungseinheit
- 11: Verbindergehäuse
- 12: Befestigungslasche
- 13, 13': Klemmverbinder
- 14, 14': Rändelschraube
- 15, 15': Steckverbinder
- 16, 16': Steckverbinder
- 17: Steckverbinder
- 18: Steckverbinder
- 19: Leitungsschutzschalter
- 20, 20': Gegensteckverbinder
- 21: Kabel
- 22, 22': Gegensteckverbinder
- 23, 23': Kabel
- 31: Kontakt
- 32: Kontakt
- 33: Kontakt
- 34: Kontakt
- 35: Kontakt
- 36: Kontakt
- 37: Kontakt
- 41: Kontakt
- 42: Kontakt
- 43: Kontakt
- 44: Kontakt
- 45: Kontakt
- 46: Kontakt
- 47: Kontakt
- 51: Kontakt
- 52: Kontakt
- 53: Kontakt
- 60: Elektrisches Gerät
- 61: Verbrauchereinheit
- 62: Verbrauchergehäuse
- 63: Filter
- 64: Stromversorgungsteil
- 65: Transceiver
- 66, 66': Pfeil
- 67: Pfeil
- 68, 68': Pfeil
- 69, 69': Pfeil
- 70: Verbindungseinheit
- 71: Verbindergehäuse
- 72: Steckverbinder
- 73: Steckverbinder
- 74: Steckverbinder
- 75: Steckverbinder
- 76: Steckverbinder
- 77: Steckverbinder
- 78: Leitungsschutzschalter

## Patentansprüche

1. Elektrisches Gerät zur Verwendung in einem Luftfahrzeug, umfassend mindestens einen elektrischen Verbraucher sowie mindestens einen Eingangssteckverbinder und mindestens einen Ausgangssteckverbinder, wobei der mindestens eine Ausgangssteckverbinder mit dem mindestens einen Eingangssteckverbinder verbunden ist und der mindestens eine Eingangssteckverbinder mit einem Bordnetz des Luftfahrzeugs verbindbar ist und wobei das elektrische Gerät (1, 1', 60) mit einem Datennetz des Luftfahrzeugs verbindbar ist, wobei das elektrische Gerät (1, 1', 60) eine Verbrauchereinheit (2, 2', 61), die den mindestens einen elektrischen Verbraucher umfasst, und eine Verbindungseinheit (10, 10', 70) umfasst, die den mindestens einen Eingangssteckverbinder und den mindestens einen Ausgangssteckverbinder aufweist, wobei die Verbrauchereinheit (2, 2', 61) mindestens einen Versorgungssteckverbinder aufweist, der mit dem mindestens einen Verbraucher verbunden ist, wobei die Verbindungseinheit (10, 10', 70) mindestens einen Verbrauchersteckverbinder aufweist, der mit dem mindestens einen Eingangssteckverbinder verbunden ist, wobei der mindestens eine Versorgungssteckverbinder mit dem mindestens einen Verbrauchersteckverbinder lösbar zusammensteckbar ist und wobei die Verbindungseinheit (10, 10', 70) mit der Verbrauchereinheit (2, 2', 61) lösbar verbindbar ist, **dadurch gekennzeichnet, dass** der mindestens eine Eingangssteckverbinder und der mindestens eine Ausgangssteckverbinder jeweils eine Mehrzahl von Kontakten zur Weiterleitung einer Mehrphasen-Wechselspannung aufweisen, wobei mindestens zwei Kontakte des Eingangs- und des Ausgangssteckverbinders zur Vertauschung von mindestens zwei Phasen miteinander verbunden sind.

2. Elektrisches Gerät nach Anspruch 1, **dadurch gekennzeichnet, dass** die Verbrauchereinheit (2, 2', 61) ein Verbrauchergehäuse (3, 62) aufweist, in dem der mindestens eine elektrische Verbraucher aufgenommen ist, dass die Verbindungseinheit (10, 10', 70) ein Verbindergehäuse (11, 71) aufweist, innerhalb dessen elektrische Leitungen zur Verbindung des Ausgangssteckverbinders und des Verbrauchersteckverbinders mit dem Eingangssteckverbinder aufgenommen sind, und dass das Verbindergehäuse (11) und das Verbrauchergehäuse (3) mechanische Verbindungsmittel aufweisen, die zum lösbaren Befestigen des Verbindergehäuses (11) an dem Verbrauchergehäuse (3) zusammenwirken.

3. Elektrisches Gerät nach einem der vorhergehenden Ansprüche, **dadurch gekennzeichnet, dass** der Verbrauchersteckverbinder über mindestens ein Kabel mit dem Versorgungssteckverbinder verbindbar ist.

4. Elektrisches Gerät nach einem der vorhergehenden Ansprüche, **dadurch gekennzeichnet, dass** der Eingangssteckverbinder und/oder der Ausgangssteckverbinder am Verbindergehäuse (11, 71) befestigt sind oder dass der Eingangssteckverbinder und/oder der Ausgangssteckverbinder vom Verbindergehäuse (11, 71) abgesetzt und über jeweils ein Kabel mit dem Verbindergehäuse (11, 71) verbunden sind.

5. Elektrisches Gerät nach einem der vorhergehenden Ansprüche, **dadurch gekennzeichnet, dass** die Verbindungseinheit (70) mindestens einen weiteren Verbrauchersteckverbinder aufweist.

6. Elektrisches Gerät nach Anspruch 5, **dadurch gekennzeichnet, dass** der mindestens eine elektrische Verbraucher als Netzteil ausgebildet ist und der mindestens eine weitere Verbrauchersteckverbinder zur Versorgung eines weiteren Verbrauchers mit elektrischer Energie über den mindestens einen Verbrauchersteckverbinder und den mindestens einen Versorgungssteckverbinder mit dem Netzteil verbindbar ist.

7. Elektrisches Gerät nach Anspruch 5 oder 6, **dadurch gekennzeichnet, dass** der mindestens eine weitere Verbrauchersteckverbinder zur Datenübertragung mit der Verbrauchereinheit (61) verbindbar ist.

8. Elektrisches Gerät nach einem der Ansprüche 5 bis 7, **dadurch gekennzeichnet, dass** die Verbindungseinheit (10, 10', 70) zur Verbindung mit dem Bordnetz und dem Datennetz des Luftfahrzeugs über mindestens zwei gleiche Kontakte des mindestens einen Eingangssteckverbinders und zur Versorgung des mindestens einen weiteren Verbrauchers mit elektrischer Energie und zur Datenverbindung mit dem mindestens einen weiteren Verbraucher über unterschiedliche Kontakte des mindestens einen Verbrauchersteckverbinders ausgebildet ist.

9. Elektrisches Gerät nach einem der vorhergehenden Ansprüche, **dadurch gekennzeichnet, dass** die Verbindungseinheit (10, 10', 70) mindestens ein elektrisches Sicherungselement zum Unterbrechen mindestens einer Verbindung zwischen dem Eingangssteckverbinder, dem Ausgangssteckverbinder und/oder dem Verbrauchersteckverbinder umfasst.

10. Elektrisches Gerät nach einem der vorhergehenden Ansprüche, **dadurch gekennzeichnet, dass** die Verbindungseinheit (10, 10', 70) eine elektronische Steuerungseinrichtung umfasst.

11. Geräteanordnung für ein Luftfahrzeug, umfassend ein erstes elektrisches Gerät (1, 60), das an ein Bordnetz des Luftfahrzeugs anschließbar ist, und mindestens ein weiteres elektrisches Gerät (1', 60), das an das erste elektrische Gerät (1, 60) angeschlossen ist, **dadurch gekennzeichnet, dass** das erste elektrische Gerät (1, 60) und das mindestens eine weitere elektrische Gerät (1', 60) jeweils gemäß einem der vorhergehenden Ansprüche ausgebildet sind, wobei das erste elektrische Gerät (1, 60) mit seinem mindestens einen Eingangssteckverbinder an das Bordnetz anschließbar ist und das mindestens eine weitere elektrische Gerät (1', 60) mit seinem mindestens einen Eingangssteckverbinder an den mindestens einen Ausgangssteckverbinder des ersten elektrischen Geräts (1, 60) angeschlossen ist.

12. Verbindungseinheit (10, 10', 70) zum Verbinden mindestens eines elektrischen Verbrauchers eines Luftfahrzeugs mit einem Bordnetz des Luftfahrzeugs, mit mindestens einem Eingangssteckverbinder und mindestens einem Ausgangssteckverbinder, wobei der mindestens eine Ausgangssteckverbinder mit dem mindestens einen Eingangssteckverbinder verbunden ist und der mindestens eine Eingangssteckverbinder mit dem Bordnetz verbindbar ist, wobei die Verbindungseinheit (10, 10', 70) mit einem Datennetz des Luftfahrzeugs verbindbar ist, wobei die Verbindungseinheit (10, 10', 70) mindestens einen Verbrauchersteckverbinder zum Verbinden des mindestens einen elektrischen Verbrauchers mit der Verbindungseinheit (10, 10', 70) aufweist und wobei der mindestens eine Verbrauchersteckverbinder mit dem mindestens einen Eingangssteckverbinder verbunden ist, **dadurch gekennzeichnet, dass** der mindestens eine Eingangssteckverbinder und der mindestens eine Ausgangssteckverbinder jeweils eine Mehrzahl von Kontakten zur Weiterleitung einer Mehrphasen-Wechselspannung aufweisen, wobei mindestens zwei Kontakte des Eingangs- und des Ausgangssteckverbinders zur Vertauschung von mindestens zwei Phasen miteinander verbunden sind.

13. Fluggastsitz, umfassend mindestens ein elektrisches Gerät (1, 60) gemäß einem der Ansprüche 1 bis 10.

14. Baureihe von elektrischen Geräten (1, 60) für Luftfahrzeuge, umfassend ein erstes elektrisches Gerät (1, 60) und ein zweites elektrisches Gerät (1, 60), **dadurch gekennzeichnet, dass** das erste elektrische Gerät (1, 60) und das zweite elektrische Gerät (1, 60) jeweils gemäß einem der Ansprüche 1 bis 10 ausgebildet sind, wobei die Verbrauchereinheit (2, 2', 61) des ersten elektrischen Geräts (1, 60) mit der Verbrauchereinheit des zweiten elektrischen Geräts (1, 60) übereinstimmend und die Verbindungseinheit (10, 10', 70) des ersten elektrischen Geräts (1, 60) von der Verbindungseinheit (10, 10', 70) des zweiten elektrischen Geräts (1, 60) abweichend ausgebildet ist, wobei die Verbindungseinheit (10, 10', 70) des ersten elektrischen Geräts (1, 60) und die Verbindungseinheit (10, 10', 70) des zweiten elektrischen Geräts (1, 60) unterschiedliche Eingangssteckverbinder aufweisen.

## Claims

1. Electrical device for use in an aircraft, comprising at least one electrical load and also at least one input plug connector and at least one output plug connector, wherein the at least one output plug connector is connected to the at least one input plug connector and the at least one input plug connector can be connected to an on-board electrical system of the aircraft and wherein the electrical device (1, 1', 60) can be connected to a data network of the aircraft, wherein the electrical device (1, 1', 60) comprises a load unit (2, 2', 61), which comprises the at least one electrical load, and a connecting unit (10, 10', 70) which has the at least one input plug connector and the at least one output plug connector, wherein the load unit (2, 2', 61) has at least one supply plug connector which is connected to the at least one load, wherein the connecting unit (10, 10', 70) has at least one load plug connector which is connected to the at least one input plug connector, wherein the at least one supply plug connector can be releasably plug-connected to the at least one load plug connector, and wherein the connecting unit (10, 10', 70) can be releasably connected to the load unit (2, 2', 61), **characterized in that** the at least one input plug connector and the at least one output plug connector each have a plurality of contacts for passing on a polyphase AC voltage, wherein at least two contacts of the input plug connector and of the output plug connector are connected to one another for interchanging at least two phases.

2. Electrical device according to Claim 1, **characterized in that** the load unit (2, 2', 61) has a load housing (3, 62) in which the at least one electrical load is accommodated, **in that** the connecting unit (10, 10', 70) has a connector housing (11, 71) within which electrical lines for connecting the output plug connector and the load plug connector to the input plug connector are accommodated, and **in that** the connector housing (11) and the load housing (3) have mechanical connecting means which interact for detachably fastening the connector housing (11) to the load housing (3).

3. Electrical device according to either of the preceding claims, **characterized in that** the load plug connector can be connected to the supply plug connector by means of at least one cable.

4. Electrical device according to one of the preceding claims, **characterized in that** the input plug connector and/or the output plug connector are fastened to the connector housing (11, 71), or **in that** the input plug connector and/or the output plug connector are remote from the connector housing (11, 71) and are connected to the connector housing (11, 71) by means of a cable in each case.

5. Electrical device according to one of the preceding claims, **characterized in that** the connecting unit (70) has at least one further load plug connector.

6. Electrical device according to Claim 5, **characterized in that** the at least one electrical load is designed as a power supply unit and the at least one further load plug connector can be connected to the power supply unit by means of the at least one load plug connector and the at least one supply plug connector for supplying electrical energy to a further load.

7. Electrical device according to Claim 5 or 6, **characterized in that** the at least one further load plug connector can be connected to the load unit (61) for data transmission.

8. Electrical device according to one of Claims 5 to 7, **characterized in that** the connecting unit (10, 10', 70) is designed for being connected to the on-board electrical system and to the data network of the aircraft by means of at least two identical contacts of the at least one input plug connector and for supplying electrical energy to the at least one further load and for forming a data connection with the at least one further load by means of different contacts of the at least one load plug connector.

9. Electrical device according to one of the preceding claims, **characterized in that** the connecting unit (10, 10', 70) comprises at least one electrical securing element for interrupting at least one connection between the input plug connector, the output plug connector and/or the load plug connector.

10. Electrical device according to one of the preceding claims, **characterized in that** the connecting unit (10, 10', 70) comprises an electronic control device.

11. Device arrangement for an aircraft, comprising a first electrical device (1, 60), which can be connected to an on-board electrical system of the aircraft, and at least one further electrical device (1', 60), which is connected to the first electrical device (1, 60), **characterized in that** the first electrical device (1, 60) and the at least one further electrical device (1', 60) are each designed according to one of the preceding claims, wherein the first electrical device (1, 60) can be connected, by way of its at least one input plug connector, to the on-board electrical system and the at least one further electrical device (1', 60) is connected, by way of its at least one input plug connector, to the at least one output plug connector of the first electrical device (1, 60).

12. Connecting unit (10, 10', 70) for connecting at least one electrical load of an aircraft to an on-board electrical system of the aircraft, comprising at least one input plug connector and at least one output plug connector, wherein the at least one output plug connector is connected to the at least one input plug connector and the at least one input plug connector can be connected to the on-board electrical system, wherein the connecting unit (10, 10', 70) can be connected to a data network of the aircraft, wherein the connecting unit (10, 10', 70) has at least one load plug connector for connecting the at least one electrical load to the connecting unit (10, 10', 70), and wherein the at least one load plug connector is connected to the at least one input plug connector, **characterized in that** the at least one input plug connector and the at least one output plug connector each have a plurality of contacts for passing on a polyphase AC voltage, wherein at least two contacts of the input plug connector and of the output plug connector are connected to one another for interchanging at least two phases.

13. Passenger seat comprising at least one electrical device (1, 60) according to one of Claims 1 to 10.

14. Series of electrical devices (1, 60) for aircraft, comprising a first electrical device (1, 60) and a second electrical device (1, 60), **characterized in that** the first electrical device (1, 60) and the second electrical device (1, 60) are each designed according to one of Claims 1 to 10, wherein the load unit (2, 2', 61) of the first electrical device (1, 60) is designed so as to correspond to the load unit of the second electrical device (1, 60) and the connecting unit (10, 10', 70) of the first electrical device (1, 60) is designed to differ from the connecting unit (10, 10', 70) of the second electrical device (1, 60), wherein the connecting unit (10, 10', 70) of the first electrical device (1, 60) and the connecting unit (10, 10', 70) of the second electrical device (1, 60) have different input plug connectors.

## Revendications

1. Dispositif électrique à utiliser dans un aéronef, comprenant au moins un consommateur électrique et au moins un connecteur d'entrée et au moins un connecteur de sortie, l'au moins un connecteur de sortie étant relié à l'au moins un connecteur d'entrée et l'au moins un connecteur d'entrée pouvant être relié à un réseau de bord de l'aéronef et le dispositif électrique (1, 1', 60) pouvant être relié à un réseau de données de l'aéronef, le dispositif électrique (1, 1', 60) comprenant une unité de consommation (2, 2', 61) qui comprend l'au moins un consommateur électrique et une unité de liaison (10, 10', 70) qui comprend l'au moins un connecteur d'entrée et l'au moins un connecteur de sortie, l'unité de consommation (2, 2', 61) comportant au moins un connecteur d'alimentation qui est relié à l'au moins un consommateur, l'unité de connexion (10, 10', 70) comportant au moins un connecteur de consommateur qui est relié à l'au moins un connecteur d'entrée, l'au moins un connecteur d'alimentation pouvant être assemblé de manière amovible à l'au moins un connecteur de consommateur, et l'unité de liaison (10, 10', 70) pouvant être reliée de manière amovible à l'unité de consommation (2, 2', 61), **caractérisée en ce que** l'au moins un connecteur d'entrée et l'au moins un connecteur de sortie comportent chacun une pluralité de contacts destinés à transmettre une tension alternative polyphasée, au moins deux contacts du connecteur d'entrée et du connecteur de sortie étant reliés l'un à l'autre pour échanger au moins deux phases.

2. Dispositif électrique selon la revendication 1, **caractérisé en ce que** l'unité de consommation (2, 2', 61) comporte un boîtier de consommateur (3, 62) dans lequel est logé au moins un consommateur électrique, **en ce que** l'unité de liaison (10, 10', 70) comporte un boîtier de connecteur (11, 71) dans lequel des lignes électriques sont reçues pour relier le connecteur de sortie et le connecteur de consommateur au connecteur d'entrée, et **en ce que** le boîtier de connecteur (11) et le boîtier de consommateur (3) comportent des moyens de liaison mécaniques qui coopèrent pour fixer de manière amovible le boîtier de connecteur (11) au boîtier de consommateur (3).

3. Dispositif électrique selon l'une des revendications précédentes, **caractérisé en ce que** le connecteur de consommateur peut être relié par au moins un câble au connecteur d'alimentation.

4. Dispositif électrique selon l'une des revendications précédentes, **caractérisé en ce que** le connecteur d'entrée et/ou le connecteur de sortie sont fixés au boîtier de connecteur (11,71) ou **en ce que** le connecteur d'entrée et/ou le connecteur de sortie sont retirés du boîtier de connecteur (11, 71) et sont reliés chacun par un câble au boîtier de connecteur (11, 71).

5. Dispositif électrique selon l'une des revendications précédentes, **caractérisé en ce que** l'unité de liaison (70) comporte au moins un autre connecteur de consommateur.

6. Dispositif électrique selon la revendication 5, **caractérisé en ce que** l'au moins un consommateur électrique est conçu comme un bloc d'alimentation et l'au moins un autre connecteur de consommateur peut être relié au bloc d'alimentation par le biais de l'au moins un connecteur de consommateur et de l'au moins un connecteur d'alimentation pour alimenter un autre consommateur en énergie électrique.

7. Dispositif électrique selon la revendication 5 ou 6, **caractérisé en ce que** l'au moins un autre connecteur de consommateur peut être relié à l'unité de consommation (61) pour transmettre des données.

8. Dispositif électrique selon l'une des revendications 5 à 7, **caractérisé en ce que** l'unité de liaison (10, 10', 70) est conçue pour être reliée au réseau de bord et au réseau de données de l'aéronef par au moins deux contacts identiques de l'au moins un connecteur d'entrée et pour alimenter l'au moins un autre consommateur en énergie électrique et pour établir la liaison de données avec l'au moins un autre consommateur par le biais de différents contacts de l'au moins un connecteur de consommateur.

9. Dispositif électrique selon l'une des revendications précédentes, **caractérisé en ce que** l'unité de liaison (10, 10', 70) comprend au moins un élément de sécurité électrique destiné à couper au moins une liaison entre le connecteur d'entrée, le connecteur de sortie et/ou le connecteur de consommateur.

10. Dispositif électrique selon l'une des revendications précédentes, **caractérisé en ce que** l'unité de liaison (10, 10', 70) comprend un moyen de commande électronique.

11. Agencement de dispositif pour aéronef, comprenant un premier dispositif électrique (1, 60) pouvant être raccordé à un réseau de bord de l'aéronef et au moins un autre dispositif électrique (1', 60) raccordé au premier dispositif électrique (1, 60), **caractérisé en ce que** le premier dispositif électrique (1, 60) et l'au moins un autre dispositif électrique (1', 60) sont conçus chacun selon l'une des revendications précédentes, le premier dispositif électrique (1, 60) pouvant être raccordé par son au moins un connecteur d'entrée au réseau de bord et l'au moins un autre dispositif électrique (1', 60) étant raccordé par son au moins un connecteur d'entrée à l'au moins un connecteur de sortie du premier dispositif électrique (1, 60).

12. Unité de liaison (10, 10', 70), destinée à relier au moins un consommateur électrique d'un aéronef à un réseau de bord de l'aéronef, comprenant au moins un connecteur d'entrée et au moins un connecteur de sortie, l'au moins un connecteur de sortie étant relié à l'au moins un connecteur d'entrée et l'au moins un connecteur d'entrée pouvant être relié au réseau de bord, l'unité de liaison (10, 10', 70) pouvant être reliée à un réseau de données de l'aéronef, l'unité de liaison (10, 10', 70) comportant au moins un connecteur de consommateur destiné à relier l'au moins un consommateur électrique à l'unité de liaison (10, 10', 70), et l'au moins un connecteur de consommateur étant relié à l'au moins un connecteur d'entrée, **caractérisé en ce que** l'au moins un connecteur d'entrée et l'au moins un connecteur de sortie comportent chacun une pluralité de contacts destinés à la transmission d'une tension alternative polyphasée, au moins deux contacts du connecteur d'entrée et du connecteur de sortie étant reliés entre eux pour échanger au moins deux phases.

13. Siège de passager, comprenant au moins un dispositif électrique (1, 60) selon l'une des revendications 1 à 10.

14. Série de dispositifs électriques (1, 60), destinés à des aéronefs, comprenant un premier dispositif électrique (1, 60) et un deuxième dispositif électrique (1, 60), **caractérisée en ce que** le premier dispositif électrique (1, 60) et le deuxième dispositif électrique (1, 60) sont conçus chacun selon l'une des revendications 1 à 10, l'unité de consommation (2, 2', 61) du premier dispositif électrique (1, 60) étant conçue de manière à concorder avec l'unité de consommation du deuxième dispositif électrique (1, 60) et l'unité de liaison (10, 10', 70) du premier dispositif électrique (1, 60) étant conçue de manière à être différente de l'unité de liaison (10, 10', 70) du deuxième dispositif électrique (1, 60), l'unité de liaison (10, 10', 70) du premier dispositif électrique (1, 60) et l'unité de liaison (10, 10', 70) du deuxième dispositif électrique (1, 60) comportant des connecteurs d'entrée différents.
